# EUROPEAN PATENT APPLICATION

(11) **EP 4 621 774 A1**
(43) Date of publication of application: **24.09.2025**
(21) Application number: 23905326.7
(22) Date of filing: 08.09.2023
(51) Int. Cl.: G10L 25/27

(54) **SPEECH RATE ADJUSTMENT METHOD, SYSTEM AND APPARATUS**

(30) Priority: 21.12.2022 CN 202211649541
(71) Applicant: Huawei Technologies Co., Ltd., Shenzhen, Guangdong 518129 (CN)
(72) Inventor: JIE, Yang, Shenzhen, Guangdong 518129 (CN); JI, Dingye, Shenzhen, Guangdong 518129 (CN); MEI, Mingli, Shenzhen, Guangdong 518129 (CN); WANG, Xueming, Shenzhen, Guangdong 518129 (CN)
(74) Representative: Gill Jennings & Every LLP
(86) International application number: PCT/CN2023/117728
(87) International publication number: WO 2024/131149

(57) **Abstract**

A speech speed adjustment method, system, and apparatus are provided. The method includes: A speech dialog apparatus sends a first speech to a terminal device (401), receives speech speed feedback information from the terminal device (404), and sends a second speech to the terminal device based on the speech speed feedback information (405), where a speech speed of the second speech is different from a speech speed of the first speech. According to the speech speed adjustment method, a speech speed of a speech subsequently sent to the terminal device is adjusted based on the speech speed feedback information, so that the speech speed of the speech can match an actual requirement of a user. This helps improve human-machine interaction experience of the user.

## Description

### CROSS-REFERENCE TO RELATED APPLICATIONS

This application claims priority to Chinese Patent Application No. 202211649541.8, filed with the China National Intellectual Property Administration on December 21, 2022 and entitled "SPEECH SPEED ADJUSTMENT METHOD, SYSTEM, AND APPARATUS", which is incorporated herein by reference in its entirety.

### TECHNICAL FIELD

This application relates to the field of speech dialog technologies, and provides a speech speed adjustment method, system, and apparatus.

### BACKGROUND

A voice chatbot, also referred to as a dialog-based artificial intelligence robot, can implement human-machine interaction through a speech dialog, capture context, and provide intelligent response. With development of intelligent speech technologies, voice chatbots are gradually used in fields such as customer service, automatic operation, smart home control, and self driving because of advantages such as long working time, a smooth conversational tone, and a fast response speed of the voice chatbot.

However, the current voice chatbot on the market still has some defects in a design of a speech speed of a dialog, often making a user dissatisfied with a conversation procedure with the voice chatbot, and even making the conversation procedure between the user and the voice chatbot interrupted. This affects improvement of human-machine interaction experience of the user.

Therefore, the design of the speech speed of the voice chatbot needs to be further studied.

### SUMMARY

This application provides a speech speed adjustment method, system, and apparatus, to generate a speech based on a speech speed suitable for a user, so that human-machine interaction experience of the user is improved.

According to a first aspect, this application provides a speech speed adjustment method. The method is applicable to a speech dialog apparatus. The speech dialog apparatus may be a voice chatbot, or may be a chip or a circuit, for example, a chip or a circuit encapsulated in a voice chatbot. The method includes: The speech dialog apparatus sends a first speech to a terminal device, receives speech speed feedback information from the terminal device, and sends a second speech to the terminal device based on the speech speed feedback information, where a speech speed of the second speech is different from a speech speed of the first speech.

In the speech speed adjustment method provided in the first aspect, for example, the speech speed feedback information may be fed back by a user based on auditory perception of the user after the user hears the first speech played by the terminal device. For example, if the user feels that the speech play speed is excessively fast, the user may indicate, in the speech speed feedback information, that the speech speed is excessively fast. In this way, the speech dialog apparatus may reduce, based on the speech speed feedback information, a speech speed of a subsequently played speech, namely, the speech speed of the second speech, to meet an auditory requirement of the user for expecting to hear the speech slower. It can be learned that, according to the speech speed adjustment method, the speech dialog apparatus can generate a speech based on an appropriate speech speed that matches an actual requirement of the user. This helps improve human-machine interaction experience of the user.

It should be noted that the second speech may be considered as all speeches that are sent by the speech dialog apparatus to the terminal device after the speech dialog apparatus receives the speech speed feedback information sent by the terminal device this time and before the speech dialog apparatus receives speech speed feedback information re-sent by the terminal device. In other words, when speech speed adjustment is not re-indicated, the speech dialog apparatus may adjust, based on the speech speed feedback information sent by the terminal device this time, speech speeds of all subsequent speeches sent to the terminal device, so that the user can hear all the subsequent speeches at a speech speed that meets a requirement of the user.

In a possible design, the speech speed feedback information may be fed back by the user to the terminal device in a speech manner. For example, when feeling that a speech play speed of the first speech is excessively fast, the user may send a direct feedback speech of "Reduce the speech speed", or may send an implicit feedback speech of "Too fast, not clear" or "Not clear, repeat it please". After receiving the speech forwarded by the terminal device, the speech dialog apparatus may determine, by parsing the speech, a manner of adjusting the speech speed. According to this design, the user may directly send the speech when having a requirement for speech speed adjustment, without performing another additional operation. This can improve convenience of indicating speech speed adjustment by the user.

In a possible design, when the speech speed feedback information indicates that the speech speed is excessively fast, the speech speed may be adjusted in the following manners.

Branch 1: If the first speech carries only non-key information, a speech speed of non-key information in the second speech is lower than a speech speed of the non-key information in the first speech. That is, when only the non-key information is played to the user, the user indicates that the speech speed is excessively fast, which means that the user expects to focus on obtaining the non-key information. In this case, a requirement of the user for clearly hearing the non-key information can be met by reducing the speech speed of the non-key information in subsequent playing.

In a further example of Branch 1, it is assumed that the speech dialog apparatus further sends a fourth speech to the terminal device before sending the first speech to the terminal device, and further sends a fifth speech to the terminal device after sending the second speech to the terminal device, and both the fourth speech and the fifth speech include key information. In this case, a speech speed of the key information in the fifth speech is lower than a speech speed of the key information in the fourth information. That is, when only the non-key information is played to the user, the user indicates that the speech speed is excessively fast, and there is a high probability that a speech speed used by the speech dialog apparatus to synthesize a speech is not suitable for the user as a whole. In this case, a speech speed of all subsequently played information (namely, the key information and the non-key information) is reduced, so that the user can clearly hear all content at a slower speech speed.

Branch 2: If the first speech carries key information, a speech speed of key information in the second speech is lower than a speech speed of the key information in the first speech. That the first speech carries key information may indicate that the first speech carries the key information but does not carry non-key information, or may indicate that the first speech carries both the key information and non-key information. In this manner, when the key information is played to the user, the user indicates that the speech speed is excessively fast, which means that the user wants to focus on obtaining the key information. In this case, a requirement of the user for clearly hearing the key information can be met by reducing the speech speed of the key information in subsequent playing.

In a further example of a Branch 2, a speech speed of non-key information in the second speech is the same as a speech speed of the non-key information in the first speech. That is, when the key information is played to the user, and the user indicates that the speech speed is excessively fast, only the speech speed of the subsequently played key information may be reduced, but the speech speed of the subsequently played non-key information is not reduced. In this way, compared with that in the first speech, key information in the second speech can be played to the user at a slower speed, and the non-key information remains at an original speed, so that the user can focus on the key information more pertinently.

It should be noted that, only the speech speed of the key information is reduced in the foregoing example. This is only an optional implementation. In another implementation, a speech speed of non-key information may also be synchronously reduced. To be specific, a speech speed of the key information in the second speech is lower than the speech speed of the key information in the first speech, and a speech speed of the non-key information in the second speech is lower than a speech speed of the non-key information in the first speech, so that the user can focus on both the key information and the non-key information.

In the foregoing design, the key information and the non-key information in the speech are split, so that the speech dialog apparatus can independently adjust the speech speed of the key information and the speech speed of the non-key information. This improves flexibility of speech speed adjustment.

In a possible design, there may be a plurality of possible cases for the speech speed of the second speech.

For example, in a possible case, the second speech carries only the key information. In this case, the second speech is synthesized from a text for synthesis with a configured speech speed of key information corresponding to a current session. That is, the speech speed of the second speech is the configured speech speed of key information corresponding to the current session.

In another possible case, the second speech carries only the non-key information. In this case, the second speech is synthesized from a text for synthesis with a configured speech speed of non-key information corresponding to a current session. That is, the speech speed of the second speech is the configured speech speed of non-key information corresponding to the current session.

In yet another possible case, the second speech carries both the key information and the non-key information. In this case, the second speech is synthesized from the key information of a text for synthesis with a configured speech speed of key information corresponding to a current session and the non-key information of the text for synthesis with a configured speech speed of non-key information corresponding to the current session. That is, the speech speed of the key information in the second speech is the configured speech of the key information corresponding to the current session, and a speech speed of the non-key information in the second speech is the configured speech speed of non-key information corresponding to the current session.

In the foregoing design, the key information and the non-key information in the text for synthesis are split, and the second speech is synthesized based on the configured speech speeds respectively corresponding to the key information and the non-key information, so that speech speed synthesis of the second speech can be flexibly controlled. For example, when the second speech includes both the key information and the non-key information, the speech synthesis manner enables the user to hear speech content with different speech speeds. This helps improve auditory perception of the user, and further helps the user focus on content that the user is interested in.

In a possible design, the speech speed of the key information and the speech speed of the non-key information in the first speech may be configured as one of the following content.

In a configuration manner 1, the speech speed of the key information in the first speech is lower than the speech speed of the non-key information in the first speech. To be specific, when the speech speed is not adjusted, the speech dialog apparatus considers by default that the speech speed of the key information is lower than the speech speed of the non-key information. Therefore, the key information is played to the user more slowly than the non-key information. In this way, the user is more likely to focus on the key information.

In a configuration manner 2, the speech speed of the key information in the first speech is the same as the speech speed of the non-key information in the first speech. To be specific, when the speech speed is not adjusted, the speech dialog apparatus considers by default that the speech speed of the key information is equal to the speech speed of the non-key information. Therefore, entire speech content is played to the user at the same speech speed. In this way, playing stability can be improved.

In a possible design, the key information may be user information obtained from a service system, such as an order number, a logistics status, a shopping record, loan information, a home address, and a phone number of the user.

According to a second aspect, this application provides a speech speed adjustment method. The method is applicable to a terminal device. The terminal device may be any device that can provide speech and data connectivity for a user, for example, a mobile phone, a computer, a wearable device, or a vehicle-mounted device. The method includes: The terminal device receives a first speech from a speech dialog apparatus, and plays the first speech to a user; then receives speech speed feedback information from the user, and sends the speech speed feedback information to the speech dialog apparatus; and receives a second speech from the speech dialog apparatus, and plays the second speech to the user. The second speech is generated by the speech dialog apparatus based on the speech speed feedback information, and a speech speed of the second speech is different from a speech speed of the first speech.

In a possible design, when the speech speed feedback information indicates that the speech speed is excessively fast, if the first speech carries only non-key information, a speech speed of non-key information in the second speech is lower than a speech speed of the non-key information in the first speech.

In a possible design, when the speech speed feedback information indicates that the speech speed is excessively fast, if the first speech carries key information, a speech speed of key information in the second speech is lower than a speech speed of the key information in the first speech.

In a further example of the foregoing design, the speech speed of the non-key information in the second speech is the same as the speech speed of the non-key information in the first speech.

In a possible design, the second speech carries only key information, and the speech speed of the second speech is a configured speech speed of key information corresponding to a current session.

In a possible design, the second speech carries only non-key information, and the speech speed of the second speech is a configured speech speed of non-key information corresponding to the current session.

In a possible design, the second speech carries both key information and non-key information, the speech speed of the key information in the second speech is a configured speech speed of key information corresponding to a current session, and the speech speed of the non-key information in the second speech is a configured speech speed of non-key information corresponding to the current session.

In a possible design, a speech speed of key information in the first speech is lower than a speech speed of non-key information in the first speech, or a speech speed of key information in the first speech is the same as a speech speed of non-key information in the first speech.

In a possible design, the key information is user information obtained from a service system.

According to a third aspect, this application provides a speech speed adjustment system, where the speech speed adjustment system includes a dialog task engine and a text-to-speech engine. The text-to-speech engine is configured to send a first speech to a terminal device, and then the terminal device plays the first speech to a user and receives speech speed feedback information of the user for the first speech. The dialog task engine is configured to: receive the speech speed feedback information from the terminal device, and send first session information to the text-to-speech engine, where the first session information includes a speech speed adjustment instruction, and the speech speed adjustment instruction is determined based on the speech speed feedback information. The text-to-speech engine is further configured to send a second speech to the terminal device based on the speech speed adjustment instruction in the first session information, where a speech speed of the second speech is different from a speech speed of the first speech.

In a possible design, the speech speed adjustment system may further include a speech recognition engine. After the text-to-speech engine sends the first speech to the terminal device, and before the dialog task engine receives the speech speed feedback information from the terminal device, the speech recognition engine receives a third speech from the terminal device, performs text conversion on the third speech to obtain the speech speed feedback information, and sends the speech speed feedback information to the dialog task engine.

In a possible design, the first session information may further include a to-be-played text, and the second speech is synthesized by the text-to-speech engine from key information in the to-be-played text with a configured speech speed of key information corresponding to a current session and non-key information in the to-be-played text with a configured speech speed of non-key information corresponding to the current session.

In a possible design, the key information in the to-be-played text may be annotated by the dialog task engine. For example, after obtaining the to-be-played text based on a user intent, the dialog task engine first recognizes the key information in the to-be-played text, annotates the key information by using a special symbol, generates the first session information based on the annotated to-be-played text, and sends the first session information to the text-to-speech engine. In this way, the text-to-speech engine may directly split the to-be-played text based on the annotated information in the to-be-played text to obtain the key information and the non-key information. This helps reduce working pressure of the text-to-speech engine, and improve a speech synthesis speed.

In a possible design, the first session information may further include an identifier of a current session. The identifier of the current session is used by the text-to-speech engine to obtain a configured speech speed of non-key information and a configured speech speed of key information that correspond to the current session, and then the second speech is synthesized from the non-key information in the to-be-played text with the configured speech speed of non-key information and the key information in the to-be-played text with the configured speech speed of key information.

In a possible design, when the speech speed feedback information indicates that the speech speed is excessively fast, the speech speed adjustment instruction indicates the following speech speed adjustment manners.

Manner 1: If the first speech carries only the non-key information, the speech speed adjustment instruction instructs to reduce the configured speech speed of non-key information and the configured speech speed of key information that correspond to the current session.

Manner 2: If the first speech carries the key information, the speech speed adjustment instruction instructs to reduce the configured speech speed of key information corresponding to the current session.

In the foregoing design, the current session means an entire conversation between a speech dialog apparatus and the terminal device, and covers an entire time period from establishment of the conversation between the speech dialog apparatus and the terminal device to hanging up. Therefore, in this design, configured speech speeds corresponding to the current session are adjusted, and then adjusted configured speech speeds are actually used in all subsequent speech dialogs until the conversation between the speech dialog apparatus and the terminal device ends.

In a possible design, in the configured speech speeds of the current session before adjustment, the configured speech speed of key information is lower than the configured speech speed of non-key information, or the configured speech speed of key information is the same as the configured speech speed of non-key information.

In a possible design, the key information is user information obtained from a service system.

According to a fourth aspect, this application provides a speech dialog apparatus, including a processor. The processor is connected to a memory, the memory is configured to store a computer program, and the processor is configured to execute the computer program stored in the memory, so that the speech dialog apparatus performs the method according to any design of the first aspect.

According to a fifth aspect, this application provides a speech dialog apparatus, including a processor and a memory. The memory stores computer program instructions, and the processor runs the computer program instructions, to implement the method according to any design of the first aspect.

According to a sixth aspect, this application provides a speech dialog apparatus, including a processor, a transceiver, and a memory. The memory stores computer program instructions, and the processor runs the computer program instructions, to implement the method according to any design of the first aspect by invoking the transceiver.

According to a seventh aspect, this application provides a speech dialog apparatus, including a processing unit and a transceiver unit. Under control of the processing unit, the transceiver unit is configured to: send a first speech to a terminal device, receive speech speed feedback information from the terminal device, and send a second speech to the terminal device based on the speech speed feedback information. A speech speed of the second speech is different from a speech speed of the first speech.

In a possible design, when the speech speed feedback information indicates that the speech speed is excessively fast, if the first speech carries only non-key information, a speech speed of non-key information in the second speech is lower than a speech speed of the non-key information in the first speech.

In a possible design, when the speech speed feedback information indicates that the speech speed is excessively fast, if the first speech carries key information, a speech speed of key information in the second speech is lower than a speech speed of the key information in the first speech.

In a further example of the foregoing design, the speech speed of the non-key information in the second speech is the same as the speech speed of the non-key information in the first speech.

In a possible design, the second speech carries only key information, and the speech speed of the second speech is a configured speech speed of key information corresponding to a current session.

In a possible design, the second speech carries only non-key information, and the speech speed of the second speech is a configured speech speed of non-key information corresponding to the current session.

In a possible design, the second speech carries both key information and non-key information, the speech speed of the key information in the second speech is a configured speech speed of key information corresponding to a current session, and the speech speed of the non-key information in the second speech is a configured speech speed of non-key information corresponding to the current session.

In a possible design, a speech speed of key information in the first speech is lower than a speech speed of non-key information in the first speech, or a speech speed of key information in the first speech is the same as a speech speed of non-key information in the first speech.

In a possible design, the key information is user information obtained from a service system.

According to an eighth aspect, this application provides a terminal device, including a processor. The processor is connected to a memory, the memory is configured to store a computer program, and the processor is configured to execute the computer program stored in the memory, so that the terminal device performs the method according to any design of the second aspect.

According to a ninth aspect, this application provides a terminal device, including a processor and a memory. The memory stores computer program instructions, and the processor runs the computer program instructions, to implement the method according to any design of the second aspect.

According to a tenth aspect, this application provides a terminal device, including a processor, a transceiver, and a memory. The memory stores computer program instructions, and the processor runs the computer program instructions, to implement the method according to any design of the second aspect by invoking the transceiver.

According to an eleventh aspect, this application provides a terminal device, including: a transceiver unit, configured to receive a first speech from a speech dialog apparatus; a playing unit, configured to play the first speech to a user. The transceiver unit is further configured to: receive speech speed feedback information from the user, send the speech speed feedback information to the speech dialog apparatus, and receive a second speech from the speech dialog apparatus, where the second speech is generated by the speech dialog apparatus based on the speech speed feedback information, and a speech speed of the second speech is different from a speech speed of the first speech. The playing unit is further configured to play the second speech to the user.

**In** a possible design, when the speech speed feedback information indicates that the speech speed is excessively fast, if the first speech carries only non-key information, a speech speed of non-key information in the second speech is lower than a speech speed of the non-key information in the first speech.

**In** a possible design, when the speech speed feedback information indicates that the speech speed is excessively fast, if the first speech carries key information, a speech speed of key information in the second speech is lower than a speech speed of the key information in the first speech.

In a further example of the foregoing design, the speech speed of the non-key information in the second speech is the same as the speech speed of the non-key information in the first speech.

In a possible design, the second speech carries only key information, and the speech speed of the second speech is a configured speech speed of key information corresponding to a current session.

In a possible design, the second speech carries only non-key information, and the speech speed of the second speech is a configured speech speed of non-key information corresponding to the current session.

In a possible design, the second speech carries both key information and non-key information, the speech speed of the key information in the second speech is a configured speech speed of key information corresponding to a current session, and the speech speed of the non-key information in the second speech is a configured speech speed of non-key information corresponding to the current session.

In a possible design, a speech speed of key information in the first speech is lower than a speech speed of non-key information in the first speech, or a speech speed of key information in the first speech is the same as a speech speed of non-key information in the first speech.

In a possible design, the key information is user information obtained from a service system.

According to a twelfth aspect, this application provides a chip. The chip may include a processor and an interface, and the processor is configured to read instructions through the interface, to perform the method according to any design of the first aspect or the second aspect.

According to a thirteenth aspect, this application provides a speech speed adjustment system. The system includes a speech dialog apparatus and a terminal device, the speech dialog apparatus is configured to implement the method according to any design of the first aspect, and the terminal device is configured to implement the method according to any design of the second aspect.

According to a fourteenth aspect, this application provides a computer-readable storage medium. The computer-readable storage medium stores a computer program. When the computer program is run, the method according to any design of the first aspect or the second aspect is implemented.

According to a fifteenth aspect, this application provides a computer program product. When the computer program product runs on a processor, the method according to any design of the first aspect or the second aspect is implemented.

For beneficial effects of the second aspect to the fourteenth aspect, specifically refer to technical effects that can be achieved by corresponding designs in the first aspect. Details are not described herein again.

### BRIEF DESCRIPTION OF DRAWINGS

FIG. 1 is an example diagram of a system architecture of a speech speed adjustment system to which an embodiment of this application is applicable;
FIG. 2 is an example diagram of a configured speech speed corresponding to a session according to an embodiment of this application;
FIG. 3 is an example diagram of a configured speech speed corresponding to another session according to an embodiment of this application;
FIG. 4 is an example schematic flowchart of a speech speed adjustment method according to Embodiment 1 of this application;
FIG. 5 is an example schematic flowchart of a speech speed adjustment method according to Embodiment 2 of this application;
FIG. 6 is an example schematic flowchart of speech synthesis according to an embodiment of this application;
FIG. 7 is an example diagram of an adjusted configured speech speed corresponding to a session according to an embodiment of this application;
FIG. 8 is an example diagram of another adjusted configured speech speed corresponding to a session according to an embodiment of this application;
FIG. 9 is an example schematic flowchart of a speech speed adjustment method according to Embodiment 3 of this application;
FIG. 10 is an example diagram of a structure of a speech speed adjustment apparatus according to an embodiment of this application;
FIG. 11 is an example diagram of a structure of a speech dialog apparatus according to an embodiment of this application; and
FIG. 12 is an example diagram of a structure of a terminal device according to an embodiment of this application.

### DESCRIPTION OF EMBODIMENTS

The following describes technical solutions in embodiments of this application with reference to accompanying drawings in embodiments of this application. The described embodiments are merely some but not all of embodiments of this application.

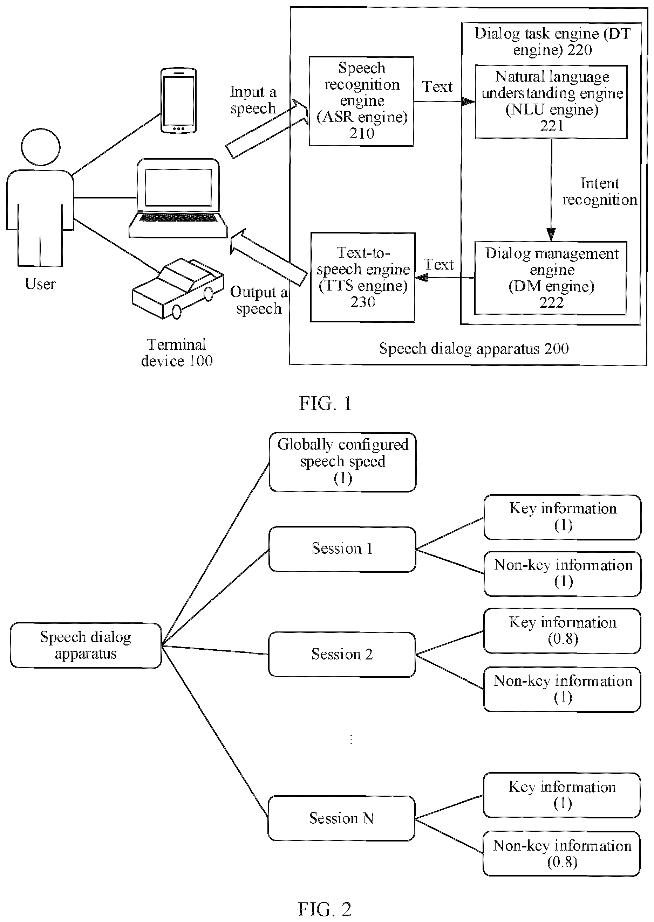

FIG. 1 is an example diagram of a system architecture of a speech speed adjustment system to which an embodiment of this application is applicable. The system architecture shown in FIG. 1 includes a terminal device 100 and a speech dialog apparatus 200. The terminal device 100 is connected to the speech dialog apparatus 200 in a wireless manner. The speech dialog apparatus 200 may be, for example, a voice chatbot, or may be referred to as a speech dialog system. It should be understood that a quantity of terminal devices 100 and a quantity of speech dialog apparatuses 200 in the system architecture are not limited in embodiments of this application. For example, as shown in FIG. 1, one speech dialog apparatus 200 may be connected to only one terminal device 100 and not be connected to another terminal device, or may be connected to a plurality of terminal devices simultaneously. In addition, in addition to the terminal device 100 and the speech dialog apparatus 200, the system architecture may further include another device, for example, a routing device, a wireless relay device, a wireless backhaul device, and an operation, administration, and maintenance device. This is not limited in embodiments of this application either. In addition, the speech dialog apparatus 200 in embodiments of this application may integrate all functions into one independent physical device, or may distribute functions on a plurality of independent physical devices. This is not limited in embodiments of this application either.

In embodiments of this application, the terminal device 100 and the speech dialog apparatus 200 may communicate with each other by using any wireless communication standard. For example, the wireless communication standard may be based on any type of the following communication system: a 5G (or referred to as a new radio (new radio, NR)) communication system, a 6G communication system, a long term evolution (long term evolution, LTE for short) system, a code division multiple access (code division multiple access, CDMA for short) system, or a wideband code division multiple access (wideband code division multiple access, WCDMA for short) system, a general packet radio service (general packet radio service, GPRS for short) system, an LTE frequency division duplex (frequency division duplex, FDD for short) system, an LTE time division duplex (time division duplex, TDD for short), a universal mobile communications system (universal mobile telecommunications system, UMTS for short), or the like. Certainly, the communication system may alternatively be another communication system in an unlicensed frequency band. This is not limited.

The following first describes some terms and related technologies in embodiments of this application.

### 1. Terminal device

The terminal device 100 in embodiments of this application is a device that provides speech and data connectivity for a user. For example, the terminal device may include a handheld device having a speech interaction function and a wireless connection function, a vehicle-mounted device, or a processing device connected to a wireless modem. The terminal device may communicate with a core network through a radio access network (radio access network, RAN), and exchange a speech and/or data with the RAN. The terminal device 100 may include user equipment (user equipment, UE), a mobile station (mobile station, MS), a mobile terminal device (mobile terminal, MT), a wireless terminal device, a device-to-device (device-to-device, D2D) terminal device, a vehicle-to-everything (vehicle-to-everything, V2X) terminal device, a machine-to-machine/machine-type communications (machine-to-machine/machine-type communications, M2M/MTC) terminal device, an Internet of things (Internet of things, IoT) terminal device, a subscriber unit (subscriber unit), and a subscriber station (subscriber station), a remote station (remote station), an access point (access point, AP), a remote terminal device (remote terminal), an access terminal device (access terminal), a user terminal device (user terminal), a user agent (user agent), a user device (user device), or the like. For example, the terminal device may include a mobile phone (or referred to as a "cellular" phone), a computer having a mobile terminal device, or a portable, pocket-sized, hand-held, or computer built-in mobile apparatus. For example, the terminal device may be a device, like a personal communications service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device like a barcode, radio frequency identification (radio frequency identification, RFID), a sensor, a global positioning system (global positioning system, GPS), or a laser scanner.

Currently, for example, the terminal device 100 is a mobile phone (mobile phone), a tablet computer, a laptop computer, a palmtop computer, a mobile Internet device (mobile Internet device, MID), a wearable device, a virtual reality (virtual reality, VR) device, an augmented reality (augmented reality, AR) device, a wireless terminal device in industrial control (industrial control), a wireless terminal device in self driving (self driving), a wireless terminal device in remote medical surgery (remote medical surgery), a wireless terminal device in a smart grid (smart grid), a wireless terminal device in transportation safety (transportation safety), a wireless terminal device in a smart city (smart city), or a wireless terminal device in a smart home (smart home).

### 2. Speech dialog apparatus

The speech dialog apparatus 200 in embodiments of this application is a robot that can implement human-machine interaction in a speech manner. The speech dialog apparatus 200 can execute a corresponding task by using a standard dialog flow, and provide a standard and quick response for a user through oral natural language interaction. For example, the speech dialog apparatus 200 includes an outbound call robot, mainly configured to implement objectives such as customer expansion, debt collection, or return visit invitation in an outbound speech call manner; an intelligent customer service robot, mainly configured to receive an incoming speech call of a user and receive the user; a digital human, which is a product combining speech intelligence and image intelligence, is a digital figure that is created by using a digital technology and that is similar to a human image, and can implement a dialog capability similar to that of a real person; a smart home robot, mainly configured to control, through speech interaction with the user in a home scenario, operations of home appliances, implement security monitoring or home entertainment, to help a user better control a home environment; and a smart phone robot, mainly configured to implement functions such as speech search, speech recognition, and speech synthesis, to help a user use a mobile phone more conveniently.

In this embodiment of this application, still as shown in FIG. 1, the speech dialog apparatus 200 may include an automatic speech recognition (automatic speech recognition, ASR) engine 210, a dialog task engine 220, and a text-to-speech (text-to-speech, TTS) engine 230. The dialog task engine 220 is also referred to as a task-based dialog (TaskBot) engine, a task-based dialog robot, or a task-based dialog system. Specifically, the dialog task engine 220 may further include a natural language understanding (natural language understanding, NLU) engine 221 and a dialog management (dialog management, DM) engine 222. When a user inputs a speech to the speech dialog apparatus 200 by using the terminal device 100, the input speech is first captured by the speech recognition engine 210, and the speech recognition engine 210 converts the input speech into an input text, and then transmits the input text to the natural language understanding engine 221. The natural language understanding engine 221 performs semantic recognition on the input text by using a natural language processing technology, determines a behavior intent of a user dialog, and sends the behavior intent to the dialog management engine 222. As a central processing unit (central processing unit, CPU) in human-machine interaction, the dialog management engine 222 determines corresponding behavior response based on the behavior intent of the user dialog, generates, in a text form, a to-be-played text corresponding to the behavior response, and sends the to-be-played text to the text-to-speech engine 230. The to-be-played text is also referred to as a speech synthesis text. After receiving the to-be-played text, the text-to-speech engine 230 performs speech synthesis on the to-be-played text to obtain an output speech, sends the output speech to the terminal device 100, and then plays the output speech to the user through the terminal device 100.

It should be noted that the foregoing engine may be considered as a core component for developing a program or a system. The core component may be a software module encapsulated in the speech dialog apparatus 200, or may be a hardware module including a function implemented by a software module, for example, a server or a server cluster. In addition, engine division of the speech dialog apparatus 200 is merely logical function division. During actual implementation, all or some of the engines may be integrated into one physical entity, or may be physically separated. In addition, the speech dialog apparatus 200 may further include more or fewer engines than those shown in FIG. 1. For example, in another example, the speech dialog apparatus 200 may further include a natural language generation (natural language generation, NLG) engine. After determining the behavior response corresponding to the behavior intent of the user dialog, the dialog management engine 222 may notify the natural language generation engine of the behavior response. The natural language generation engine generates, in a text form, a to-be-played text corresponding to the behavior response, and returns the to-be-played text to the dialog management engine 222. It should be understood that there are many possible implementations of the speech dialog apparatus 200, and the implementations are not listed one by one in embodiments of this application.

### 3. Key information and non-key information

In embodiments of this application, a to-be-played text may include key information and/or non-key information. For example, the to-be-played text may include only non-key information, or may include only key information, or may include both key information and non-key information. The key information is also referred to as a dialog entity, and includes user information obtained from a service system side, such as an order number, a logistics status, a shopping record, loan information, a home address, and a phone number. The non-key information is also referred to as a dialog template, and is text content pre-configured in the speech dialog apparatus 200. The non-key information may be usually combined with a dialog slot to form the dialog content. The dialog slot herein is an attribute explicitly defined by the dialog entity. Specifically, after determining the behavior intent of the user dialog, the dialog management engine 222 obtains, from the speech dialog apparatus 200 by using a pre-configured dialog procedure, dialog content that matches a current dialog. When the dialog content includes only the dialog template, the dialog management engine 222 generates a to-be-played text based on the dialog template. The to-be-played text includes only the non-key information. When the dialog content includes both the dialog template and the dialog slot, the dialog management engine 222 obtains, from the service system side, the user information corresponding to the dialog slot, fills the user information in a location of the dialog slot, and generates a to-be-played text based on the dialog template and the user information. The to-be-played text includes both the key information and the non-key information.

For ease of understanding, the following provides descriptions by using an example.

For example, in a possible application scenario, it is assumed that speech content sent by a user to the speech dialog apparatus 200 by using the terminal device 100 is as follows:
"I have a product that has been signed, but the product has not been received."

The dialog management engine 222 finds corresponding dialog content from the speech dialog apparatus 200 as follows:
"nín fǎn kui suǒ gòu sha̅ng pǐn méi yǒu sho̅u dào, xu̅ yào hé nín hé shí yí xià, gǐng wèn ding da̅n hào shi bu shi" +FLOW.orderID".

In the dialog content, "nín fǎn kui suǒ gòu sha̅ng pǐn méi yǒu sho̅u dào, xu̅ yào hé nín hé shí yí xià, gǐng wèn ding da̅n hào shi bu shi" corresponds to a dialog template, and "+FLOW.orderID" corresponds to a dialog slot.

Because the dialog content includes the dialog slot, the dialog management engine 222 obtains, by querying the service system, user information corresponding to the dialog slot, in other words, obtains, from the service system side, shopping order number information of the user based on identity information of the user. It is assumed that the obtained order number information is 86725272611912040192. The dialog management engine 222 fills the order number information in a location of the dialog slot, and then generates a to-be-played text. Content is as follows:
"nín fǎn kui suǒ gòu sha̅ng pǐn méi yǒu sho̅u dào, xu̅ yào hé nín hé shí yí xià, gǐng wèn ding da̅n hào shi bu shi 86725272611912040192"

In the to-be-played text, "nín fǎn kuì suǒ gòu sha̅ng pǐn méi yǒu sho̅u dào, xu̅ yào hé nín hé shí yí xià, qǐng wèn ding da̅n hào shi bu shi" is the non-key information, and "86725272611912040192" is the key information.

For another example, in another possible application scenario, it is assumed that speech content sent by a user to the speech dialog apparatus 200 is as follows:
"Please introduce content of the * * phone fee package."

The dialog management engine 222 finds corresponding dialog content from the speech dialog apparatus 200 as follows:
"** huà fèi tào ca̅n de nèi róng ba̅o kuò: měi yuè 300M quán guó liú liàng, 240 te̅n zho̅ng to̅ng huà shí cháng, 200M shěng nèi liú liàng"

The dialog content is totally a dialog template, and has no dialog slot. Therefore, the dialog management engine 222 may directly generate a to-be-played text based on the dialog content. The content is as follows:
"** huà fèi tào ca̅n de nèi róng ba̅o kuò: měi yuè 300M quán guó liú liàng, 240 te̅n zho̅ng to̅ng huà shí cháng, 200M shěng nèi liú liàng"

It should be noted that content included in the dialog entity may be set by a person skilled in the art based on actual experience. For example, the content may include the user information obtained from the service system as described above, or may include user information obtained from a non-service system, or may include non-user information, or the like. This is not specifically limited in embodiments of this application.

### 4. Session and configured speech speed corresponding to the session

In embodiments of this application, one session is a complete conversation between the terminal device 100 and the speech dialog apparatus 200, and covers an entire time period from establishment of the conversation between the terminal device 100 and the speech dialog apparatus 200 to hanging up. One session may include a plurality of rounds of dialogs. In each round of dialogs, a user sends a speech to the speech dialog apparatus 200 by using the terminal device 100, and the speech dialog apparatus 200 queries a corresponding dialog procedure, generates an output speech, and plays the output speech to the user through the terminal device 100. The session between the speech dialog apparatus 200 and the terminal device 100 corresponds to a configured speech speed. The configured speech speed is applicable to all dialogs of the session. To be specific, regardless of a quantity of rounds of dialogs included in the session, speeches of these dialogs are synthesized based on the configured speech speed corresponding to the session. The speech speeds of these dialogs remain unchanged provided that the configured speech speed corresponding to the session remains unchanged.

In embodiments of this application, the configured speech speed corresponding to the session may be maintained by the speech dialog apparatus 200, for example, may be stored in a storage unit in the speech dialog apparatus 200. When required, the speech dialog apparatus 200 obtains and uses the configured speech speed from the storage unit. In addition, because the speech dialog apparatus 200 may be simultaneously connected to a plurality of terminal devices 100, the speech dialog apparatus 200 may simultaneously maintain configured speech speeds corresponding to a plurality of sessions between the speech dialog apparatus 200 and the plurality of terminal devices 100. Configured speech speeds corresponding to each session may further include a configured speech speed corresponding to key information and a configured speech speed corresponding to non-key information. The configured speech speed corresponding to the key information is used for speech synthesis of the key information in a to-be-played text, and the configured speech speed corresponding to the non-key information is used for speech synthesis of the non-key information in the to-be-played text. In addition, the speech dialog apparatus 200 may further maintain a globally configured speech speed. The globally configured speech speed is a configured speech speed used for synthesis from the to-be-played text by default. When a session is established between the speech dialog apparatus 200 and the terminal device 100 for the first time, the speech dialog apparatus 200 may construct, based on the globally configured speech speed, a configured speech speed corresponding to the session between the speech dialog apparatus 200 and the terminal device 100, in other words, configure, as the globally configured speech speed, the configured speech speed corresponding to the session between the speech dialog apparatus 200 and the terminal device 100.

For ease of understanding, FIG. 2 is an example diagram of a configured speech speed corresponding to a session according to an embodiment of this application. As shown in FIG. 2, in this example, a globally configured speech speed and a configured speech speed corresponding to each of a session 1 to a session N are maintained in a speech dialog apparatus, where N is a positive integer. The globally configured speech speed is "1" (where "1" is a speech speed mark, for example, indicates 150 words/minute, and another speech speed mark may alternatively be used in another example, which is not limited). This means that the speech dialog apparatus synthesizes a speech based on a speech speed of 150 words/second by default. In configured speech speeds corresponding to the session 1, configured speech speeds of key information and non-key information each are "1". This means that, in the speech synthesized by the speech dialog apparatus, the key information and the non-key information have a same speech speed. Therefore, the key information and the non-key information in the speech are played to a user at the same speech speed. In this way, the user has a same degree of focusing on the key information and the non-key information theoretically. In configured speech speeds corresponding to the session 2, a configured speech speed of key information is "0.8", and a configured speech speed of non-key information is "1". This means that, in the speech synthesized by the speech dialog apparatus, a speech play speed of the key information is lower than a speech play speed of the non-key information. Therefore, the key information in the speech is played to the user more slowly than the non-key information. In this way, after hearing the speech, the user is more likely to focus on content of the key information. In configured speech speeds corresponding to the session N, a configured speech speed of key information is "1", and a configured speech speed of non-key information is "0.8". This means that, in the speech synthesized by the speech dialog apparatus, a speech play speed of the key information is higher than a speech play speed of the non-key information. Therefore, the non-key information in the speech is played to the user more slowly than the key information. In this way, after hearing the speech, the user is more likely to focus on content of the non-key information.

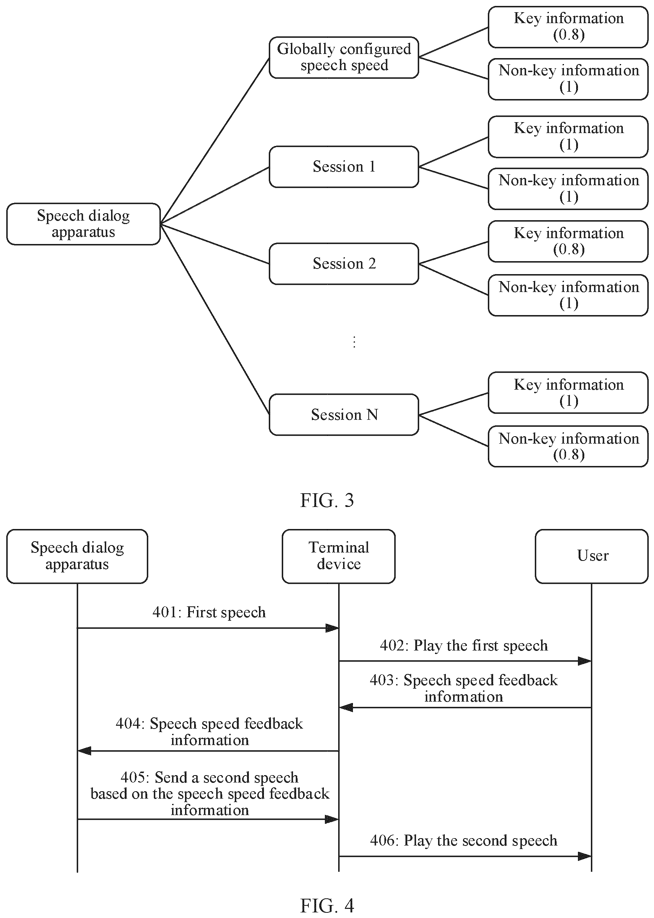

It should be noted that, for the globally configured speech speed in FIG. 2, a same speech speed is configured for the key information and the non-key information. This is only an optional implementation. In another implementation, the globally configured speech speed may be alternatively in another form. For example, FIG. 3 is an example diagram of a configured speech speed corresponding to another session according to an embodiment of this application. As shown in FIG. 3, for the globally configured speech speed in this example, different speech speeds are configured for key information and non-key information, and a speech speed of the key information is lower than a speech speed of the non-key information. In this way, after a speech is synthesized based on a default globally configured speech speed, the key information is more highlighted in a speech playing process, so that the user can focus on the key information. It should be understood that, in another implementation, in the globally configured speech speed, a speech speed of the key information may alternatively be higher than a speech speed of the non-key information. This is not specifically limited in embodiments of this application.

### 5. Speech synthesis

Speech synthesis in embodiments of this application is a process of synthesizing speech information from text information. The process is related to two phases, namely, word-to-phoneme conversion and phoneme-to-acoustic wave conversion.

In the word-to-phoneme conversion phase, the text-to-speech engine 230 first analyzes a structure of the text information to split the entire text information into different words, and then performs word-to-phoneme conversion on each split word according to a preset rhythm control rule, to convert a word sequence into a phoneme sequence. In some examples of text splitting, long text content may be split into several small parts. For example, numbers may be split every four numbers, and an address may be split based on a structure of a province, a city, a town, or a district. In some examples of the rhythm control rule, the text information may be configured as a lilt, for example, may include but is not limited to pause or stress. The pause indicates how to pause during sentence reading in the phoneme-to-acoustic wave conversion phase, and the stress indicates a part that shall be emphasized during reading in the phoneme-to-acoustic wave conversion phase.

For example, when a to-be-played text is "nín fǎn kui suǒ gòu sha̅ng pǐn méi yǒu sho̅u dào, xu̅ yào hé nín hé shí yí xià, gǐng wèn ding da̅n hào shi bu shi 86725272611912040192", processing such as text splitting, rhythm control, and word-to-phoneme conversion is performed on the to-be-played text, and then a phoneme sequence obtained through conversion is as follows:
"sos ke4/hu4!fa3n/kuei4@suo3/gou4!sha1ng/pi3n@mei2/iou3!shou1/dao4#eos sos xv1/iao4!he2/ni3!he2/shii2!i2/xia4#eos
sos qi3ang/ue4n!di4ng/daln/hao4@shii4/bu5/shii4! eos
sos ba1/biou4/qi1/e4r#u3/e4r/qi1/e4r#liou4/iao1/iao1
/jiou3!iao1/e4r/li2ng/sii4#li2ng/iao1!jiou3/e4r#eos"

The foregoing phoneme sequence includes a pinyin and a tone of each word in the to-be-played text. Each sentence is annotated with "sos" before the sentence and "#eos" after the sentence. In addition, any two adjacent words are separated by "/" in each sentence, words that need to be read intermittently are separated by "@", and words that need to be stressed are annotated with "!".

It should be understood that the foregoing phoneme sequence is merely a possible example. A specific form of the phoneme sequence may be set by a person skilled in the art based on a use habit of the person skilled in the art or an actual situation. For example, in another example, a special symbol in the phoneme sequence may alternatively indicate another meaning, or the phoneme sequence may further have more or fewer symbols than the phoneme sequence. This is not specifically limited in embodiments of this application.

In the phoneme-to-acoustic wave conversion phase, the text-to-speech engine 230 synthesizes, based on a pre-configured speech speed, a speech waveform from the phoneme sequence obtained in the word-to-phoneme conversion phase. Different speech waveforms are combined together to form a speech corresponding to the text information.

At present, in the solution provided in the industry, the pre-configured speech speed is usually fixed, or although the speech speed is not fixed, different speech speeds are configured only for different fields. For different users who access conversation content belonging to a same field, a same speech speed is still used to perform speech synthesis on the conversation content accessed by the users. However, a requirement of a user for a speech speed in a conversation is affected by an environment in which the user is located and a listening level of the user. Even a same user may have different requirements for a speech speed in a conversation. An excessively fast or excessively slow speech speed may directly affect experience of using human-machine interaction by the user. For example, the same speech speed may be just suitable for hearing in a quiet environment, but when the user moves to a noisy environment, the speech speed at which a speech is previously heard in the quiet environment is no longer applicable. In this case, the speech speed needs to be reduced based on a change of a user requirement. For another example, the same speech speed may be just suitable for a user with sufficient time, but may be excessively slow for a user with urgent time. In this case, different speech speeds need to be appropriately configured based on requirements of different users. However, according to the solution provided in the industry, a speech cannot be played to a user at a speech speed suitable for the user. This affects improvement of human-machine interaction experience of the user.

In view of this, embodiments of this application provide a speech speed adjustment method, to adjust, based on speech speed feedback information fed back by a user, a speech speed of a speech subsequently played to the user, so that the speech play speed can meet a user requirement. This improves human-machine interaction experience of the user.

The following describes a solution to the foregoing technical problem by using specific embodiments of this application. It should be noted that, in the following descriptions, a speech dialog apparatus may be the speech dialog apparatus 200 in FIG. 1, or a communication apparatus that can support the speech dialog apparatus in implementing a function required for the method, or certainly may be another communication apparatus or communication system, for example, a chip, a chip system, a circuit, or a circuit system that carries a component for implementing a function required by the speech dialog apparatus side. The terminal device may be the terminal device 100 in FIG. 1, or a communication apparatus that can support the terminal device in implementing a function required for the method, or certainly may be another communication apparatus or communication system, for example, a chip, a chip system, a circuit, or a circuit system that carries a component for implementing a function required by the terminal device side.

It should be understood that the terms "system" and "network" in embodiments of this application may be used interchangeably. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are intended to distinguishing between a plurality of objects, but are not intended to limit priorities or importance of the plurality of objects. For example, a first speech and a second speech are merely used to distinguish between two speeches sent by the speech dialog apparatus to the terminal device before and after speech speed adjustment, but do not indicate different priorities, importance degrees, or the like of the two speeches.

### Embodiment 1

FIG. 4 is an example schematic flowchart of a speech speed adjustment method according to Embodiment 1 of this application. The method may be performed by a terminal device and a speech dialog apparatus, for example, the terminal device 100 and the speech dialog apparatus 200 shown in FIG. 1. As shown in FIG. 4, the method includes the following steps.

Step 401: The speech dialog apparatus sends a first speech to the terminal device.

The first speech is obtained by performing speech synthesis on a to-be-played text. The to-be-played text may be obtained by querying dialog content based on a user intent in a historical dialog, or may be determined by the speech dialog apparatus when there is no historical dialog. This is not specifically limited.

Step 402: The terminal device plays the first speech to a user.

Step 403: The terminal device receives speech speed feedback information from the user.

In an optional implementation, the speech speed feedback information may be fed back by the user to the terminal device in a speech manner. For example, when feeling that a played speed of the first speech is excessively fast, the user may send a direct feedback speech of "Reduce the speech speed" to the terminal device, or may send an implicit feedback speech of "Too fast, not clear" or "Not clear, repeat it please" to the terminal device, and the terminal device forwards the speech to the speech dialog apparatus. In this implementation, the user may directly send the speech when having a requirement for speech speed adjustment, without performing another additional operation. This can help improve convenience of indicating speech speed adjustment by the user.

It should be noted that the speech speed feedback information may alternatively be fed back by the user to the terminal device in another manner, for example, may be fed back through a text input on a conversation page, or may be fed back by using a brain wave. This is not specifically limited.

Step 404: The terminal device sends the speech speed feedback information to the speech dialog apparatus.

Step 405: The speech dialog apparatus sends a second speech to the terminal device based on the speech speed feedback information, where a speech speed of the second speech is different from a speech speed of the first speech.

In this embodiment of this application, the speech dialog apparatus may adjust the speech speed based on the speech speed feedback information in the following manners.

When the speech speed feedback information indicates that the speech speed is excessively fast, the speech dialog apparatus may reduce a speech speed of a speech subsequently sent to the terminal device. Herein, reducing the speech speed of the speech subsequently sent to the terminal device may be reducing a speech speed of only a speech sent to the terminal device next time, and a speech after the next time is still synthesized based on a previous speech speed. In this case, the second speech is the speech sent to the terminal device next time. Alternatively, reducing the speech speed of the speech subsequently sent to the terminal device may be reducing speech speeds of all speeches subsequently sent to the terminal device. In this case, the second speech may be any one of the speeches subsequently sent to the terminal device. In addition, reducing the speech speed of the subsequent speech may be reducing speech speeds/a speech speed of key information and/or non-key information in the subsequent speech, for example, reducing a speech speed of only the key information in the subsequent speech, or reducing a speech speed of only the non-key information in the subsequent speech, or reducing both a speech speed of the key information in the subsequent speech and a speech speed of the non-key information in the subsequent speech. This is not specifically limited.

On the contrary, when the speech speed feedback information indicates that the speech speed is excessively slow, the speech dialog apparatus may increase a speech speed of a speech subsequently sent to the terminal device. Corresponding to the foregoing content, increasing the speech speed of the speech subsequently sent to the terminal device may be increasing a speech speed of only a speech sent to the terminal device next time, or may be increasing speech speeds of all speeches subsequently sent to the terminal device, or may be increasing a speech speed of only key information in the subsequent speech, or may be increasing a speech speed of only non-key information in the subsequent speech, or may be increasing both a speech speed of key information in the subsequent speech and a speech speed of non-key information in the subsequent speech. This is not specifically limited.

It should be noted that, in the foregoing adjustment manner, because it is considered that the key information is more important than the non-key information, only the speech speed of the key information may be reduced when the speech speed of the subsequent speech is reduced, and only the speech speed of the non-key information may be increased when the speech speed of the subsequent speech is increased. In this way, the speech speed of the key information in the second speech is lower than the speech speed of the non-key information, so that the user can focus on the key information more easily.

Further, for example, the speech speed feedback information indicates that the speech speed is excessively fast. The speech dialog apparatus may further comprehensively determine, based on the first speech and the speech speed feedback information, a manner of adjusting the speech speed.

Specifically, when the first speech carries only non-key information but does not carry key information, it indicates that only the non-key information is played to the user. In this case, the user indicates, by using the speech speed feedback information, that the speech speed is excessively fast, which means that the user wants to focus on obtaining the non-key information. In this way, the speech dialog apparatus may reduce a speech speed of non-key information in a speech subsequently sent to the terminal device, that is, enable the speech speed of the non-key information in the second speech to be lower than a speech speed of the non-key information in the first speech, to meet a requirement of the user for clearly hear the non-key information. It should be noted that, because it is considered that the key information is more important than the non-key information, the speech dialog apparatus may further synchronously reduce a speech speed of key information in the speech subsequently sent to the terminal device, that is, reduce speech speeds of all information (including the key information and the non-key information) in the speech subsequently sent to the terminal device, so that the user can clearly hear all content at a slower speech speed.

Alternatively, when the first speech carries only key information but does not carry non-key information, it indicates that only the key information is played to the user. In this case, the user indicates, by using the speech speed feedback information, that the speech speed is excessively fast, which means that the user wants to focus on obtaining the key information. In this way, the speech dialog apparatus may reduce a speech speed of key information in a speech subsequently sent to the terminal device, that is, enable the speech speed of the key information in the second speech to be lower than a speech speed of the key information in the first speech, to meet a requirement of the user for clearly hear the key information. It should be noted that, because it is considered that the non-key information is not as important as the key information, the speech dialog apparatus may not reduce a speech speed of non-key information in the speech subsequently sent to the terminal device, so that the user can focus on the key information more easily.

Alternatively, when the first speech carries both key information and non-key information, it indicates that both the key information and the non-key information are played to the user. In this case, the user indicates, by using the speech speed feedback information, that the speech speed is excessively fast. In this way, the speech dialog apparatus may at least reduce a speech speed of key information in a speech subsequently sent to the terminal device. For example, only the speech speed of the key information may be reduced, and a speech speed of non-key information may not be reduced. In this way, compared with that in the first speech, the speech speed of the key information in the second speech is lower than a speech speed of the key information in the first speech, and the speech speed of the non-key information in the second speech is the same as a speech speed of the non-key information in the first speech. In other words, the key information in the second speech is played to the user more slowly, and the non-key information is still played to the user at an original speed. This helps the user focus on the key information. Alternatively, both the speech speed of the key information and a speech speed of the non-key information may be reduced. In this way, compared with that in the first speech, the speech speed of the key information in the second speech is lower than a speech speed of the key information in the first speech, and the speech speed of the non-key information in the second speech is also lower than a speech speed of the non-key information in the first speech. This helps the user focus on both the key information and the non-key information.

It should be noted that the foregoing speech speed adjustment may be specifically implemented by the speech dialog apparatus by adjusting a configured speech speed corresponding to a current session. For specific adjustment content, refer to Embodiment 2 described below. Details are not described herein.

Step 406: The terminal device plays the second speech to the user.

It should be noted that, after the terminal device plays the second speech to the user, if the terminal device receives speech speed feedback information fed back by the user again, the terminal device may send the speech speed feedback information to the speech dialog apparatus again, and the speech dialog apparatus adjusts, based on the speech speed feedback information, a speech speed of a speech subsequently sent to the terminal device again. In this way, the terminal device and the speech dialog apparatus repeatedly perform step 401 to step 406, so that a speech speed can be adjusted in real time based on the speech speed feedback information of the user, and there is no need to modify system configuration. This can meet an auditory requirement of the user while improving flexibility of speech speed adjustment.

In the foregoing Embodiment 1, the speech speed of the speech subsequently played to the user is adjusted based on the speech speed feedback information, so that the speech speed of the speech can match an actual requirement of the user. This helps improve human-machine interaction experience of the user.

As shown in FIG. 1, the speech speed adjustment apparatus includes the ASR engine, the TaskBot engine, and the TTS engine. Therefore, the method performed by the speech speed adjustment apparatus in the foregoing Embodiment 1 may be implemented through interaction between the engines and interaction between the engines and the terminal device. The following further describes, based on Embodiment 1 by using Embodiment 2, a manner of implementing the speech speed adjustment method through interaction between the engines.

### Embodiment 2

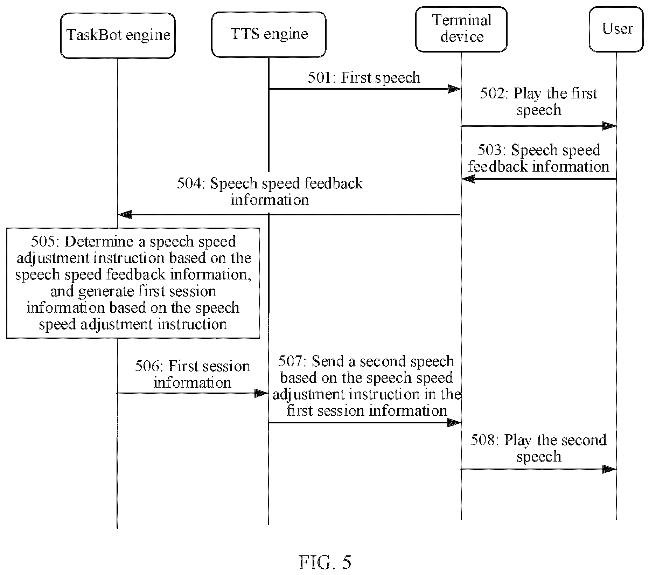

FIG. 5 is an example schematic flowchart of the speech speed adjustment method according to Embodiment 2 of this application. The method may be performed by a terminal device, a TaskBot engine, and a TTS engine, for example, the terminal device 100, the TaskBot engine 220, and the TTS engine 230 shown in FIG. 1. As shown in FIG. 5, the method includes the following steps.

Step 501: The TTS engine sends a first speech to the terminal device.

The first speech is obtained by the TTS engine by performing speech synthesis on a to-be-played text. The to-be-played text may be carried by the TaskBot engine in second session information through a session channel and sent to the TTS engine. The session channel herein may be established by the TaskBot engine for an entire conversation between the speech dialog apparatus and the terminal device when the speech dialog apparatus performs an initial dialog with the terminal device, and all subsequent session information belonging to the current conversation is transmitted to the TTS engine through the session channel.

In this embodiment of this application, in addition to the to-be-played text, an identifier of a current session and a speech speed adjustment instruction may be further carried in the second session information.

The identifier of the current session identifies a complete conversation between the terminal device and the speech dialog apparatus, and covers an entire time period from establishment of the conversation between the terminal device and the speech dialog apparatus to hanging up. The identifier of the current session may be generated when the TaskBot engine sends session information to the TTS engine for the first time, and may be in a form of a number, a letter, a character, or a combination of at least two of a number, a letter, and a character. In an example, the identifier of the current session may be specifically a random number.

The to-be-played text may be determined by the TaskBot engine based on a user intent in a historical dialog, or may be determined by the TaskBot engine when there is no historical dialog. In addition, after determining the to-be-played text, the TaskBot engine may further identify key information in the to-be-played text, and annotate the key information in the to-be-played text. An annotation manner may be annotating with a special character, a color, a label, or the like. This is not specifically limited.

The speech speed adjustment instruction is used by the TTS engine to adjust configured speech speeds corresponding to the current session. The speech speed adjustment instruction may be determined by the TaskBot engine based on speech speed feedback information. Alternatively, when there is no speech speed feedback information, the speech speed adjustment instruction is configured as an empty instruction, which means that the configured speech speeds of the current session do not need to be adjusted.

For example, it is assumed that the to-be-played text in the first speech is "kè hù fǎn kuì suǒ gòu sha̅ng pǐn méi yǒu sho̅u dào, xu̅ yào hé nín hé shí yí xià, gǐng wèn ding da̅n hào shi bu shi 86725272611912040192", and the identifier of the current session is 1234. In this case, the second session information may include the following content:
Identifier of the current session: 1234;
to-be-played text annotated with the key information: "kè hù fǎn kuì suǒ gòu sha̅ng pǐn méi yǒu sho̅u dào, xu̅ yào hé nín hé shí yí xià, qǐng wèn ding da̅n hào shi bu shi ^86725272611912040192^"; and
speech speed adjustment instruction: AutoSpeed: "".

The key information "86725272611912040192" in the to-be-played text is annotated by using a special symbol "^", and "" in the speech speed adjustment instruction indicates an empty instruction, that is, the configured speech speeds of the current session are not adjusted.

Further, after receiving the second session information, the TTS engine may synthesize the first speech by performing the following steps (not shown in FIG. 5).

Step 1: The TTS engine parses the second session information to obtain the identifier of the current session, the to-be-played text, and the speech speed adjustment instruction.

When the speech speed adjustment instruction is an empty instruction, the TTS engine may directly ignore the speech speed adjustment instruction. When the speech speed adjustment instruction is not an empty instruction, the TTS engine may adjust, based on the speech speed adjustment instruction, the configured speech speeds corresponding to the current session. For a specific adjustment manner, refer to the following step 505. Details are not described herein.

Step 2: The TTS engine analyzes a sentence structure of the to-be-played text, to be specific, determines annotated information in the to-be-played text as key information, and determines information other than the annotated information in the to-be-played text as non-key information.

Step 3: The TTS engine separately performs text-to-phoneme processing on the key information and the non-key information to obtain corresponding phoneme sequences.

Step 4: The TTS engine obtains, based on the identifier of the current session, the configured speech speeds corresponding to the current session, where the configured speech speeds include a configured speech speed corresponding to the key information and a configured speech speed corresponding to the non-key information.

Specifically, if a current dialog is the first dialog between the speech dialog apparatus and the terminal device, the TTS engine may first establish, based on a globally configured speech speed, the configured speech speeds corresponding to the current session. When the globally configured speech speed is shown in FIG. 2, in the configured speech speeds corresponding to the current session, the configured speech speed of the key information is the same as the configured speech speed of the non-key information. When the globally configured speech speed is shown in FIG. 3, in the configured speech speeds corresponding to the current session, the configured speech speed of the key information is lower than the configured speech speed of the non-key information. On the contrary, if a current dialog is not the first dialog between the speech dialog apparatus and the terminal device, the TTS engine may directly obtain, based on the identifier of the current session, the configured speech speeds corresponding to the current session.

Step 5: The TTS engine associates, based on the configured speech speeds corresponding to the current session, the phoneme sequence corresponding to the key information with the configured speech speed of key information corresponding to the current session, and associates the phoneme sequence corresponding to the non-key information with the configured speech speed of non-key information corresponding to the current session.

Step 6: The TTS engine inputs, into a speech synthesis model, the phoneme sequence corresponding to the key information and the phoneme sequence corresponding to the non-key information, to obtain two speech streams output by the speech synthesis model.

The speech synthesis model may be any model that can synthesize a speech from a text. Specifically, the speech synthesis model may be an end-to-end (end-to-end, E2E) speech synthesis model.

Step 7: The TTS engine adjusts speech speeds of the two speech streams based on the configured speech speeds associated with the two phoneme sequences, and combines the two adjusted speech streams, to obtain the first speech.

It should be noted that, when the configured speech speeds corresponding to the current session are set based on the globally configured speech speed shown in FIG. 2, because the non-key information and the key information correspond to a same configured speech speed, a speech speed of the key information in the first speech is the same as a speech speed of the non-key information in the first speech. In this way, entire content of the first speech is played to a user at the same speech speed. This helps improve playing stability. When the configured speech speeds corresponding to the current session are set based on the globally configured speech speed shown in FIG. 3, because the configured speech speed of key information is lower than the configured speech speed of non-key information, a speech speed of the key information in the first speech is lower than a speech speed of the non-key information in the first speech, so that a user can focus on the key information more easily.

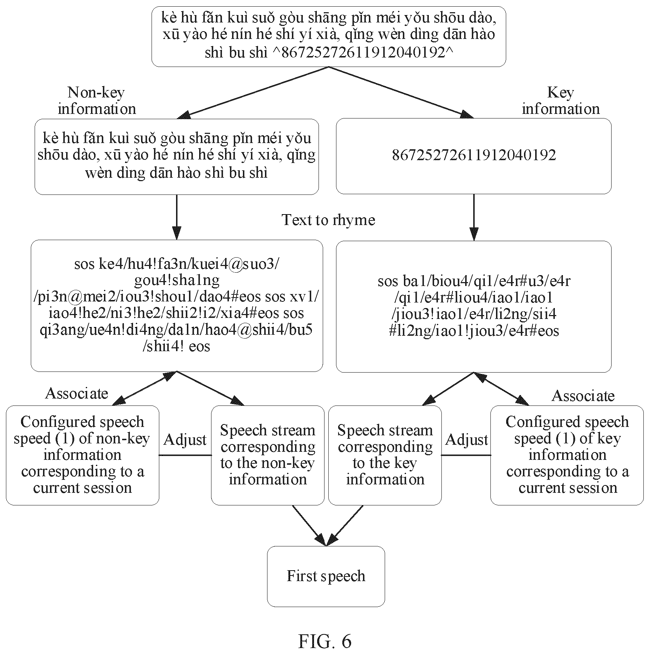

To facilitate understanding of the foregoing synthesis process, FIG. 6 is an example schematic flowchart of speech synthesis according to an embodiment of this application. As shown in FIG. 6, in this example, it is assumed that a current session is the session 1 shown in FIG. 2, and a to-be-played text is "kè hù fǎn kuì suǒ gòu sha̅ng pǐn méi yǒu sho̅u dào, xu̅ yào hé nín hé shí yí xià, gǐng wèn ding da̅n hào shi bu shi 86725272611912040192".

In this case, a sentence structure of the to-be-played text is first analyzed, and the to-be-played text is split into non-key information and key information. The non-key information is "kè hù fǎn kui suǒ gòu sha̅ng pǐn méi yǒu sho̅u dào, xu̅ yào hé nín hé shí yí xià, gǐng wèn ding da̅n hào shi bu shi", and the key information is "86725272611912040192".

Then, phoneme conversion is separately performed on the key information and the non-key information, to obtain a phoneme sequence "sos ke4/hu4! fa3n/kuei4@suo3/gou4! sha1ng/pi3n@mei2/iou3! shou1/dao4#eos sos xv1/iao4!he2/ni3!he2/shii2!i2/xia4#eos sos qi3ang/ue4n!di4ng/daln/hao4@shii4/bu5/shii4! eos" corresponding to the non-key information and a phoneme sequence "sos ba1/biou4/qi1/e4r#u3/e4r/qi1/e4r#liou4/iao1/iao1 /jiou3!iao1/e4r/li2ng/sii4#li2ng/iao1!jiou3/e4r#eos" corresponding to the key information.

Further, the phoneme sequence corresponding to the key information is associated with a configured speech speed, namely, "1", of the key information corresponding to the session 1 shown in FIG. 2, and the phoneme sequence is input into a speech synthesis model, to obtain a speech stream corresponding to the key information. In addition, the phoneme sequence corresponding to the non-key information is associated with a configured speech speed, namely, "1", of the non-key information corresponding to the session 1 shown in FIG. 2, and the phoneme sequence is input into the speech synthesis model, to obtain a speech stream corresponding to the non-key information.

Finally, the configured speech speed "1" associated with the phoneme sequence corresponding to the key information is used to adjust a speech speed of the speech stream corresponding to the key information, and the configured speech speed "1" associated with the phoneme sequence corresponding to the non-key information is used to adjust a speech speed of the speech stream corresponding to the non-key information. In addition, an adjusted speech stream corresponding to the key information and an adjusted speech stream corresponding to the non-key information are combined to obtain the first speech.

Step 502: The terminal device plays the first speech to the user.

Step 503: The terminal device receives the speech speed feedback information from the user.

Step 504: The terminal device sends the speech speed feedback information to the TaskBot engine.

Step 505: The TaskBot engine determines the speech speed adjustment instruction based on the speech speed feedback information, and generates first session information based on the speech speed adjustment instruction.

In addition to the speech speed adjustment instruction, the first session information may further include the identifier of the current session and the to-be-played text. The key information in the to-be-played text may be annotated in advance, and the to-be-played text may be different from the to-be-played text used to synthesize the first speech in step 501, or may be the to-be-played text used to synthesize the first speech in step 501. In this way, when the user does not clearly hear the speech, same content is replayed to the user at a more appropriate speech speed, so that the user clearly learns of corresponding information.

For example, it is assumed that the to-be-played text in the first speech is "kè hù fǎn kuì suǒ gòu sha̅ng pǐn méi yǒu sho̅u dào, xu̅ yào hé nín hé shí yí xià, gǐng wèn ding da̅n hào shi bu shi 86725272611912040192", the speech speed feedback information received for the first speech is "Too fast, not clear", and the identifier of the current session is 1234. In this case, the first session information may include the following content:
Identifier of the current session: 1234;
to-be-played text annotated with the key information: "kè h6 fǎn kuì suǒ gòu sha̅ng pǐn méi yǒu sho̅u dào, xu̅ yào hé nín hé shí yí xià, qǐng wèn ding da̅n hào shi bu shi ^86725272611912040192^"; and
speech speed adjustment instruction: AutoSpeed: "down".

The key information "86725272611912040192" in the to-be-played text is annotated by using a special symbol "^", and "down" in the speech speed adjustment instruction instructs to reduce a speech speed.

In the foregoing content, the TaskBot engine annotates the key information in the to-be-played text in advance, and then the TTS engine can directly split the to-be-played text based on the annotated information in the to-be-played text. This helps reduce working pressure of a text-to-speech engine, and improves a speech synthesis speed. In addition, if the identifier of the current session is carried in the session information, the configured speech speeds corresponding to the current session can be further accurately obtained based on the identifier of the current session. This improves accuracy of speech speed adjustment.

Step 506: The TaskBot engine sends the first session information to the TTS engine.

The TaskBot engine may send the first session information to the TTS engine through the previously established session channel.

Step 507: The TTS engine sends a second speech to the terminal device based on the speech speed adjustment instruction in the first session information, where a speech speed of the second speech is different from a speech speed of the first speech.

In this embodiment of this application, after receiving the first session information sent by the TaskBot engine, the TTS engine may first parse the first session information to obtain the identifier of the current session, the to-be-played text, and the speech speed adjustment instruction; then obtain, based on the identifier of the current session, the configured speech speeds corresponding to the current session, and adjust, based on the speech speed adjustment instruction, the configured speech speeds corresponding to the current session; and further, perform speech synthesis based on adjusted configured speech speeds corresponding to the to-be-played text, to obtain the second speech. For a specific speech synthesis process, refer to step 501. Details are not described herein again.

In this embodiment of this application, the configured speech speeds corresponding to the current session include the configured speech speed corresponding to the key information and the configured speech speed corresponding to the non-key information. The TTS engine adjusts, based on the speech speed adjustment instruction, the configured speech speeds corresponding to the current session in a plurality of manners. For example, when the speech speed adjustment instruction instructs to reduce the speech speed, the TTS engine may reduce the configured speech speed of the key information and/or the configured speech speed of the non-key information that correspond/corresponds to the current session. When the speech speed adjustment instruction instructs to increase the speech speed, the TTS engine may increase the configured speech speed of the key information and/or the configured speech speed of the non-key information that correspond/corresponds to the current session.

In a specific speech speed adjustment manner, when the speech speed adjustment instruction instructs to reduce the speech speed, the following steps are performed.

### Branch 1

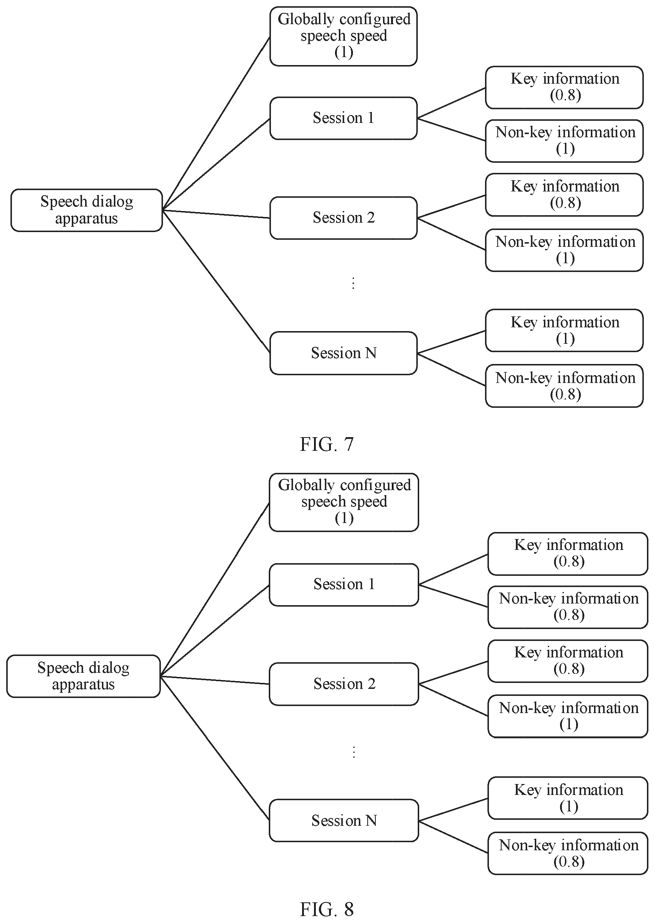

If the first speech carries the key information, the TTS engine may reduce the configured speech speed of key information corresponding to the current session, but does not reduce the configured speech speed of non-key information corresponding to the current session. For example, it is assumed that configured speech speeds corresponding to the session 1 in FIG. 2 are used when the first speech is played. In this case, when the speech speed adjustment instruction instructs to reduce the speech speed, if the first speech carries both the non-key information and the key information, the TTS engine may adjust, to configured speech speeds shown in FIG. 7, the configured speech speeds corresponding to the session 1. Refer to FIG. 2 and FIG. 7. It can be learned that, before the adjustment, both the configured speech speed of key information and the configured speech speed of non-key information that correspond to the session 1 are "1" (for example, 150 words/second). After the adjustment, the configured speech speed of the key information corresponding to the session 1 is reduced to "0.8" (namely, 120 words/second), and the configured speech speed of the non-key information remains "1" (namely, 150 words/second). In this way, when subsequently sending a speech to the terminal device, the speech dialog apparatus invokes the adjusted configured speech speeds corresponding to the session 1 to perform speech synthesis. In this case, a speech speed of key information in a subsequently synthesized speech is lower than a speech speed of key information in the speech before adjustment, and a speech speed of non-key information remains unchanged. In other words, compared with previous playing, the key information in current playing is played to the user at a slower speed, and the non-key information is still played at an original speed. This helps the user focus on the key information.

It should be noted that, in the foregoing content, that the first speech carries the key information may indicate that the first speech carries both the key information and the non-key information, or may indicate that the first speech carries only the key information but does not carry the non-key information. This is not specifically limited in embodiments of this application. In addition, the foregoing adjustment manner is merely an example. In an actual operation, another adjustment manner may be used. For example, when the first speech carries the key information, both the configured speech speed of key information corresponding to the current session and the configured speech speed of non-key information corresponding to the current session may be reduced, or only the configured speech speed of non-key information corresponding to the current session may be reduced, but the configured speech speed of key information corresponding to the current session is not reduced. This is not specifically limited in embodiments of this application.

### Branch 2

If the first speech carries only the non-key information but does not carry the key information, the TTS engine may reduce both the configured speech speed of key information and the configured speech speed of non-key information that correspond to the current session. For example, it is assumed that the configured speech speeds corresponding to the session 1 in FIG. 2 is used when the first speech is played. In this case, when the speech speed adjustment instruction instructs to reduce the speech speed, if the first speech carries only the non-key information, the TTS engine may adjust, to configured speech speeds shown in FIG. 8, the configured speech speeds corresponding to the session 1. Refer to FIG. 2 and FIG. 8. It can be learned that, before the adjustment, both the configured speech speed of key information and the configured speech speed of non-key information that correspond to the session 1 are "1" (for example, 150 words/second). After the adjustment, the configured speech speed of the key information and the configured speech speed of the non-key information that correspond to the session 1 both are reduced to "0.8" (namely, 120 words/second). In this way, when subsequently sending a speech to the terminal device, the TTS engine invokes the adjusted configured speech speeds corresponding to the session 1 to perform speech synthesis. In this case, a speech speed of key information and a speech speed of non-key information in a subsequently synthesized speech both are lower than a speech speed of key information and a speech speed of non-key information in the speech before adjustment. In other words, compared with previous playing, the key information and the non-key information in current playing are played to the user at a slower speed. This helps the user focus on all played information.

It should be noted that the foregoing adjustment manner is merely an example. In an actual operation, another adjustment manner may be used. For example, when the first speech carries only the non-key information, only the configured speech speed of key information corresponding to the current session may be reduced, but the configured speech speed of non-key information corresponding to the current session is not reduced; or only the configured speech speed of non-key information corresponding to the current session may be reduced, and the configured speech speed of key information corresponding to the current session is not reduced. This is not specifically limited in embodiments of this application.

Step 508: The terminal device plays the second speech to the user.

In the foregoing Embodiment 2, the configured speech speeds corresponding to the current session is adjusted based on the speech speed feedback information, and then adjusted configured speech speed can be used in all subsequent speech dialogs until the conversation between the speech dialog apparatus and the terminal device ends. In this case, the user only needs to send the speech speed feedback information when necessary, and subsequently, the user can hear the speech at a speech speed suitable for the user. In addition, the key information and the non-key information in the to-be-played text are split, and the speech speed of the key information and the speech speed of the non-key information can be separately adjusted. This implements a fine-grained speech speed adjustment capability.

Still as shown in FIG. 1, the TaskBot engine may include the NLU engine and the DM engine. Therefore, the method performed by the TaskBot engine in the foregoing Embodiment 2 may be specifically implemented through interaction between the NLU engine and the DM engine. The following further describes a specific implementation of the speech speed adjustment method based on Embodiment 2 by using Embodiment 3.

### Embodiment 3

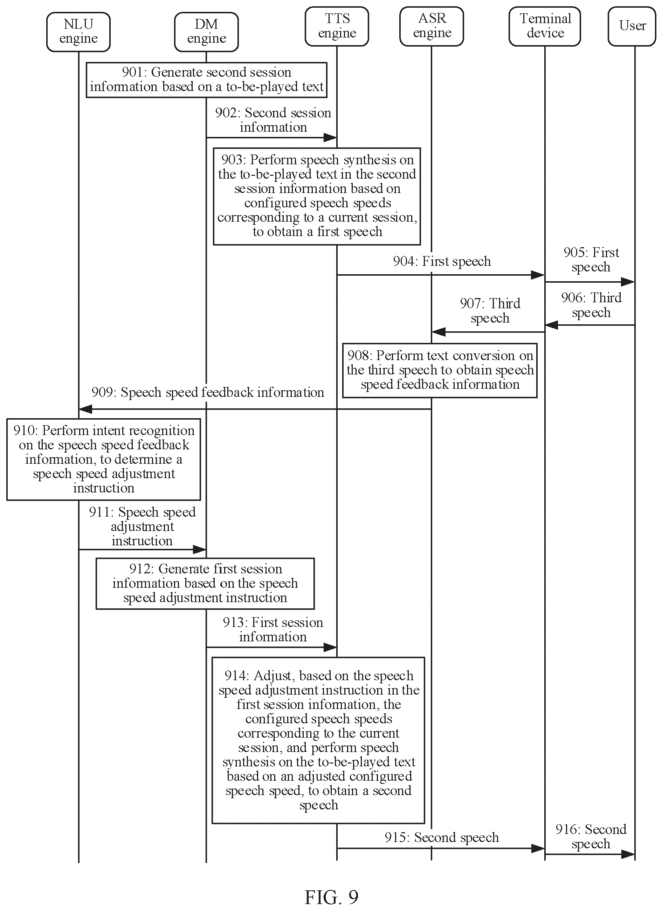

FIG. 9 is an example schematic flowchart of a speech speed adjustment method according to Embodiment 3 of this application. The method may be performed by a terminal device, an ASR engine, an NLU engine, a DM engine, and a TTS engine, for example, the terminal device 100, the ASR engine 210, the NLU engine 221, the DM engine 222, and the TTS engine 230 shown in FIG. 1. As shown in FIG. 9, the method includes the following steps.

Step 901: The DM engine obtains a to-be-played text, and generates second session information based on the to-be-played text.

Specifically, the DM engine may determine dialog content by using a pre-configured dialog procedure. When the dialog content includes only a dialog template, the DM engine generates the to-be-played text based on the dialog template. In this case, the to-be-played text includes only non-key information. When the dialog content includes both a dialog template and a dialog slot, the DM engine queries a service system to obtain user information corresponding to the dialog slot, fills the user information in a location of the dialog slot, and generates the to-be-played text based on the dialog template and the filled user information. In this case, the to-be-played text includes both non-key information and key information. The non-key information is the dialog template, and the key information is the user information obtained based on a dialog operation.

Further, after the DM engine obtains the to-be-played text, if it is determined that the to-be-played text includes the key information, the DM engine may annotate the key information, and then generate the second session information based on the to-be-played text annotated with the key information, an identifier of a current session, and a speech speed adjustment instruction. If it is determined that the to-be-played text does not include the key information, the DM engine may directly generate the second session information based on the to-be-played text, an identifier of the current session, and a speech speed adjustment instruction. In the second session information, because speech speed feedback information is not received, the speech speed adjustment instruction corresponds to an empty instruction.

Step 902: The DM engine sends the second session information to the TTS engine.

Specifically, the DM engine may send the second session information to the TTS engine through a session channel previously established for the terminal device.

Step 903: The TTS engine performs speech synthesis on the to-be-played text in the second session information based on configured speech speeds corresponding to the current session, to obtain a first speech.

Specifically, after receiving the second session information, the TTS engine may first parse the second session information to obtain the to-be-played text, the identifier of the current session, and the speech speed adjustment instruction, and then obtain, based on the identifier of the current session, the configured speech speeds corresponding to the current session. The configured speech speeds may include a configured speech speed of key information and a configured speech speed of non-key information, as shown in FIG. 2, FIG. 3, FIG. 7, or FIG. 8. In addition, because the speech speed adjustment instruction is the empty instruction, the TTS engine does not adjust the configured speech speeds of the current session. Further, the TTS engine determines whether there is an annotation in the to-be-played text. If there is an annotation, the TTS engine determines annotated information as the key information, and determines unannotated information as the non-key information. Then, the TTS engine synthesizes the first speech from the key information in the to-be-played text with the configured speech speed of key information corresponding to the current session and the non-key information other than the key information in the to-be-played text with the configured speech speed of non-key information corresponding to the current session. If there is no annotation, the TTS engine directly synthesizes the first speech from the entire to-be-played text based on the configured speech speed of non-key information corresponding to the current session.

It should be noted that, for a specific implementation of each step in step 901 to step 903, refer to step 701 in the foregoing Embodiment 2. Details are not described herein again.

Step 904: The TTS engine sends the first speech to the terminal device.

Step 905: The terminal device plays the first speech to a user.

Step 906: The terminal device receives a third speech from the user, where the third speech includes speech speed feedback information.

Step 907: The terminal device sends the third speech to the ASR engine.

Step 908: The ASR engine performs text conversion on the third speech to obtain the speech speed feedback information.

Step 909: The ASR engine sends the speech speed feedback information to the NLU engine.

Step 910: The NLU engine performs intent recognition on the speech speed feedback information, to determine the speech speed adjustment instruction.

In the foregoing step 906 to step 910, it is assumed that the third speech is "Too fast, not clear". In this case, after performing intent understanding, the NLU engine may determine that a user intent is to reduce a speech speed. Therefore, the NLU engine determines that the speech speed adjustment instruction is to reduce the speech speed, for example, "down".

Step 911: The NLU engine sends the speech speed adjustment instruction to the DM engine.

Step 912: The DM engine generates first session information based on the speech speed adjustment instruction.

Specifically, the DM engine may generate the first session information based on the to-be-played text in step 901, the identifier of the current session, and the speech speed adjustment instruction. The speech speed adjustment instruction is determined based on the speech speed feedback information, and is a non-empty instruction, for example, "down". The key information is annotated in the to-be-played text, or there is no annotation when there is no key information. The identifier of the current session is consistent with that in step 901.

It should be noted that, in the foregoing content, the first session information includes the to-be-played text that is the same as that in the second session information. This is only an optional implementation. In this way, the speech dialog apparatus can replay, at an adjusted speech speed, content that is not clearly heard by the user previously. However, in another implementation, the first session information may alternatively not include the to-be-played text, or may include a to-be-played text different from that in the second session information. For example, in an example, the user directly indicates "Reduce a speech speed of a subsequent played speech". In this case, the first session information may include only the identifier of the current session and the speech speed adjustment instruction, and does not include the to-be-played text. In this way, the speech dialog apparatus directly adjusts a configured speech speed corresponding to the current session, and performs synthesis on the subsequent to-be-played text based on an adjusted configured speech speed, without replaying same content. Alternatively, in another example, the user indicates "Reduce a speech speed when a speech is played next time". In this case, the first session information may include a next to-be-played text, the identifier of the current session, and the speech speed adjustment instruction, and the next to-be-played text may be different from a previous to-be-played text. In this way, after adjusting a configured speech speed corresponding to the current session, the speech dialog apparatus directly performs synthesis on the next to-be-played text based on an adjusted configured speech speed, and sends the next to-be-played text to the terminal device.

Step 913: The DM engine sends the first session information to the TTS engine.

Specifically, the DM engine may send the first session information to the TTS engine through the session channel previously established for the terminal device.

Step 914: The TTS engine adjusts, based on the speech speed adjustment instruction in the first session information, the configured speech speeds corresponding to the current session, and performs speech synthesis on the to-be-played text based on the adjusted configured speech speeds corresponding to the current session, to obtain a second speech.

In step 914, the TTS engine first parses the first session information to obtain the to-be-played text, the identifier of the current session, and the speech speed adjustment instruction. Then, the TTS engine obtains, based on the identifier of the current session, the configured speech speeds corresponding to the current session, where the configured speech speeds include the configured speech speed of key information and the configured speech speed of non-key information. Further, because the speech speed adjustment instruction is not an empty instruction, the TTS engine may adjust the configured speech speeds of the current session based on the speech speed adjustment instruction. For example, when the speech speed adjustment instruction is "down", the TTS engine reduces the configured speech speeds of the current session. In addition, the TTS engine determines whether there is an annotation in the to-be-played text. If there is an annotation, the TTS engine determines annotated information as the key information, and determines unannotated information as the non-key information. Then, the TTS engine synthesizes the second speech from the key information in the to-be-played text with an adjusted configured speech speed of key information corresponding to the current session and the non-key information other than the key information in the to-be-played text with an adjusted configured speech speed of non-key information corresponding to the current session. If there is no annotation, the TTS engine directly synthesizes the second speech from the entire to-be-played text based on an adjusted configured speech speed of non-key information corresponding to the current session.

It should be noted that, for a manner in which the TTS engine adjusts the configured speech speeds corresponding to the current session, refer to step 507 in the foregoing Embodiment 2. Details are not described herein again.

Step 915: The TTS engine sends the second speech to the terminal device.

Step 916: The terminal device plays the second speech to the user.

In the foregoing Embodiment 3, interaction between a plurality of engines in the speech dialog apparatus and interaction between the engines and the terminal device are configured, so that a speech speed adjustment function of the speech dialog apparatus can be implemented more precisely from a perspective of the engines. This reduces working pressure of a single engine.

It should be understood that embodiments in this application may be alternatively combined with each other to obtain a new embodiment.

In addition, some variations may be made to the speech speed adjustment method in this application, to obtain a new embodiment. For example, in a specific variation manner, a voice chatbot may further configure different globally configured speech speeds (for related content of the globally configured speech speed, refer to FIG. 2 or FIG. 3) for different fields. In this way, after receiving an input speech of a user, the voice chatbot first establishes a session with the user, and configures, based on a field accessed by the input speech of the user, a configured speech speed corresponding to the session of the user as a globally configured speech speed corresponding to the accessed field. Further, in a conversation process for the field, when the user thinks that a speech speed is inappropriate, the user may further send speech speed feedback information, and then the voice chatbot adjusts, based on the speech speed feedback information of the user, the configured speech speed corresponding to the session of the user. It can be learned that, in the variation manner, for the user who accesses dialog content in different fields, the voice chatbot can perform speech playing at different speech speeds, and for different users who access dialog content in a same field, the voice chatbot can also perform speech playing at different speech speeds, or for the user who accesses a field, the voice chatbot can also perform speech playing in different conversation time periods at different speech speeds. In this way, flexibility of a speech play speed of the voice chatbot can be further improved. It should be understood that only one possible variation is provided herein, and there may be another variation in a specific implementation. Details are not listed one by one in embodiments of this application.

It should be noted that, names of the foregoing information are merely examples. With evolution of communication technologies, the name of any foregoing information may be changed. However, regardless of how the names of the information change, provided that meanings of the information are the same as those of the information in this application, the information falls within the protection scope of this application.

The foregoing mainly describes, from a perspective of interaction between network elements, the solutions provided in this application. It may be understood that, to implement the foregoing functions, the foregoing network elements include corresponding hardware structures and/or software modules for performing the functions. A person of ordinary skill in the art should easily be aware that, in combination with the examples described in embodiments disclosed in this specification, units, algorithms and steps may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it shall not be considered that the implementation goes beyond the scope of the present invention.

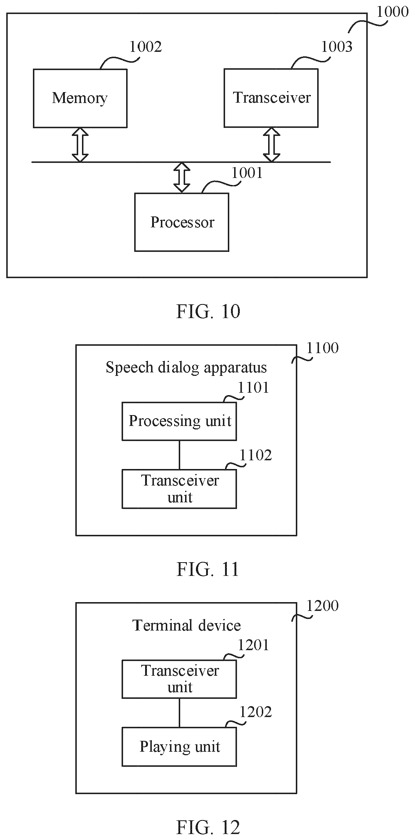

According to the foregoing method, FIG. 10 is a diagram of a structure of a speech speed adjustment apparatus according to an embodiment of this application. The speech speed adjustment apparatus may be a speech dialog apparatus or a terminal device, or may be a chip or a circuit, for example, a chip or a circuit disposed in a speech dialog apparatus, or a chip or a circuit disposed in a terminal device. As shown in FIG. 10, the speech speed adjustment apparatus 1000 includes a processor 1001, a memory 1002, and a transceiver 1003. Further, the speech speed adjustment apparatus 1000 may further include a bus system. The processor 1001, the memory 1002, and the transceiver 1003 are connected to each other through the bus system.

It should be understood that the processor 1001 may be a chip. The processor 1001 may be a field-programmable gate array (field-programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable logic device (programmable logic device, PLD) or another integrated chip.

In an implementation process, the steps in the foregoing methods may be completed by using an integrated logic circuit of hardware in the processor 1001 or instructions in a form of software. The steps in the methods disclosed with reference to embodiments of this application may be directly performed by a hardware processor, or may be performed by a combination of hardware and a software module in the processor 1001. A software module may be located in a mature storage medium in the art, for example, a random access memory, a flash memory, a read-only memory, a programmable read-only memory, an electrically erasable programmable memory, or a register. The storage medium is located in the memory 1002. The processor 1001 reads information in the memory 1002, and completes the steps in the foregoing methods in combination with hardware of the processor 1001.

It should be noted that, the processor 1001 in embodiments of this application may be an integrated circuit chip, and has a signal processing capability. In an implementation process, the steps in the foregoing method embodiments may be completed by using an integrated logic circuit of hardware in the processor or instructions in a form of software. The processor may be a general-purpose processor, a digital signal processor (DSP), an application-specific integrated circuit (ASIC), a field-programmable gate array (FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed by a hardware decoding processor, or may be performed by a combination of hardware and a software module in a decoding processor. A software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps in the foregoing methods in combination with hardware of the processor.

It may be understood that the memory 1002 in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the systems and methods described in this specification includes but is not limited to these and any memory of another proper type.

When the speech speed adjustment apparatus 1000 corresponds to the speech dialog apparatus in the foregoing methods, the speech speed adjustment apparatus 1000 may include the processor 1001, the memory 1002, and the transceiver 1003. The memory 1002 is configured to store instructions. The processor 1001 is configured to execute the instructions stored in the memory 1002, to implement a related solution of the speech dialog apparatus in the method corresponding to any one or more of FIG. 4, FIG. 5, or FIG. 9.

When the speech speed adjustment apparatus 1000 is the foregoing speech dialog apparatus, the speech speed adjustment apparatus 1000 may be configured to perform the method performed by the speech dialog apparatus in any one of Embodiment 1 to Embodiment 3.

When the speech speed adjustment apparatus 1000 is the foregoing speech dialog apparatus, and performs the method in Embodiment 1, the processor 1001 controls the transceiver 1003 by invoking a computer program in the memory 1002 to implement the following operations: sending a first speech to a terminal device, receiving speech speed feedback information from the terminal device, and sending a second speech to the terminal device based on the speech speed feedback information. A speech speed of the second speech is different from a speech speed of the first speech.

When the speech speed adjustment apparatus 1000 corresponds to the terminal device in the foregoing methods, the speech speed adjustment apparatus 1000 may include the processor 1001, the memory 1002, and the transceiver 1003. The memory 1002 is configured to store instructions. The processor 1001 is configured to execute the instructions stored in the memory 1002, to implement a related solution of the terminal device in the method corresponding to any one or more of FIG. 4, FIG. 5, or FIG. 9.

When the speech speed adjustment apparatus 1000 is the foregoing terminal device, the speech speed adjustment apparatus 1000 may be configured to perform the method performed by the terminal device in any one of Embodiment 1 to Embodiment 3.

When the speech speed adjustment apparatus 1000 is the foregoing terminal device, and performs the method in Embodiment 1, the transceiver 1003 receives a first speech from a speech dialog apparatus, and the processor 1001 plays the first speech to a user. The transceiver 1003 further receives speech speed feedback information from the user, sends the speech speed feedback information to the speech dialog apparatus, and receive a second speech from the speech dialog apparatus. The processor 1001 further plays the second speech to the user. The second speech is generated by the speech dialog apparatus based on the speech speed feedback information, and a speech speed of the second speech is different from a speech speed of the first speech.

For concepts, explanations, detailed descriptions, and other steps of the speech speed adjustment apparatus 1000 that are related to the technical solutions provided in embodiments of this application, refer to the descriptions of the content in the foregoing method or other embodiments. Details are not described herein.

Based on the foregoing embodiments and a same concept, FIG. 11 is a diagram of a structure of a speech dialog apparatus according to an embodiment of this application. As shown in FIG. 11, the speech dialog apparatus 1100 may be the foregoing speech dialog apparatus, or may be a chip or a circuit, for example, a chip or a circuit disposed in a speech dialog apparatus.

As shown in FIG. 11, the speech dialog apparatus 1100 may include a processing unit 1101 and a transceiver unit 1102, configured to implement the steps performed by the speech dialog apparatus in the method corresponding to any one or more of FIG. 4, FIG. 5, or FIG. 9. Specifically, when the speech dialog apparatus 1100 is the foregoing speech dialog apparatus, under control of the processing unit 1101, the transceiver unit 1102 sends a first speech to a terminal device, receives speech speed feedback information from the terminal device, and sends a second speech to the terminal device based on the speech speed feedback information. A speech speed of the second speech is different from a speech speed of the first speech.

The transceiver unit 1102 may be a sending unit or a transmitter when sending information. The transceiver unit 1102 may be a receiving unit or a receiver when receiving information. The transceiver unit 1102 may be a transceiver. The transceiver, the transmitter, or the receiver may be a radio frequency circuit. When the speech dialog apparatus 1100 includes a storage unit, the storage unit is configured to store computer instructions. The processing unit 1101 is communicatively connected to the storage unit and executes the computer instructions stored in the storage unit, so that the speech dialog apparatus 1100 is configured to perform the method performed by the speech dialog apparatus in any one of Embodiment 1 to Embodiment 3. The processing unit 1101 may be a general-purpose central processing unit (CPU), a microprocessor, or an application-specific integrated circuit (Application-Specific Integrated Circuit, ASIC).

When the speech dialog apparatus 1100 is a chip, the transceiver unit 1102 may be an input and/or output interface, pin, or circuit, or the like. The processing unit 1101 may execute the computer instructions stored in the storage unit, so that the chip in the speech dialog apparatus 1100 performs the method performed by the speech dialog apparatus in any one of Embodiment 1 to Embodiment 3. Optionally, the storage unit is a storage unit in the chip, for example, a register or a cache. The storage unit may alternatively be a storage unit outside the chip in the speech dialog apparatus 1100, for example, a read-only memory (Read-Only Memory, ROM), another type of static storage device that can store static information and instructions, or a random access memory (Random Access Memory, RAM).

For concepts, explanations, detailed descriptions, and other steps of the speech dialog apparatus 1100 that are related to the technical solutions provided in embodiments of this application, refer to the descriptions of the content in the foregoing method or other embodiments. Details are not described herein.

Based on the foregoing embodiments and a same concept, FIG. 12 is a diagram of a structure of a terminal device according to an embodiment of this application. As shown in FIG. 12, the terminal device 1200 may be the foregoing terminal device, or may be a chip or a circuit, for example, a chip or a circuit disposed in a terminal device.

As shown in FIG. 12, the terminal device 1200 may include a transceiver unit 1201 and a playing unit 1202, configured to implement the steps performed by the terminal device in the method corresponding to any one or more of FIG. 4, FIG. 5, or FIG. 9. Specifically, when the terminal device 1200 is the foregoing terminal device, the transceiver unit 1201 receives a first speech from a speech dialog apparatus, and the playing unit 1202 plays the first speech to a user. The transceiver unit 1201 further receives speech speed feedback information from the user, sends the speech speed feedback information to the speech dialog apparatus, and receives a second speech from the speech dialog apparatus. The playing unit 1202 further plays the second speech to the user. The second speech is generated by the speech dialog apparatus based on the speech speed feedback information, and a speech speed of the second speech is different from a speech speed of the first speech.

The transceiver unit 1201 may be a sending unit or a transmitter when sending information. The transceiver unit 1201 may be a receiving unit or a receiver when receiving information. The transceiver unit 1201 may be a transceiver. The transceiver, the transmitter, or the receiver may be a radio frequency circuit. When the terminal device 1200 includes a storage unit, the storage unit is configured to store computer instructions. The playing unit 1202 is communicatively connected to the storage unit and executes the computer instructions stored in the storage unit, so that the terminal device 1200 is configured to perform the method performed by the terminal device in any one of Embodiment 1 to Embodiment 3. The playing unit 1202 may be a general-purpose central processing unit (CPU), a microprocessor, or an application-specific integrated circuit (Application-Specific Integrated Circuit, ASIC).

When the terminal device 1200 is a chip, the transceiver unit 1201 may be an input and/or output interface, pin, or circuit, or the like. The playing unit 1202 may execute the computer instructions stored in the storage unit, so that the chip in the terminal device 1200 performs the method performed by the terminal device in any one of Embodiment 1 to Embodiment 3. Optionally, the storage unit is a storage unit in the chip, for example, a register or a cache. The storage unit may alternatively be a storage unit outside the chip in the terminal device 1200, for example, a read-only memory (Read-Only Memory, ROM), another type of static storage device that can store static information and instructions, or a random access memory (Random Access Memory, RAM).

For concepts, explanations, detailed descriptions, and other steps of the terminal device 1200 that are related to the technical solutions provided in embodiments of this application, refer to the descriptions of the content in the foregoing method or other embodiments. Details are not described herein.

It should be understood that division into the units of the speech dialog apparatus 1100 and the terminal device 1200 is merely logical function division. During actual implementation, all or some of the units may be integrated into one physical entity, or may be physically separated. In this embodiment of this application, the transceiver unit 1102 and the transceiver unit 1201 may be implemented by the transceiver 1003 in FIG. 10, and the processing unit 1101 and the playing unit 1202 may be implemented by the processor 1001 in FIG. 10.

According to the methods provided in embodiments of this application, this application further provides a computer program product. The computer program product includes computer program code. When the computer program code is run on a computer, the computer is enabled to perform the method in any one of the embodiments shown in FIG. 4, FIG. 5, or FIG. 9.

According to the methods provided in embodiments of this application, this application further provides a computer-readable storage medium. The computer-readable medium stores program code. When the program code is run on a computer, the computer is enabled to perform the method in any one of the embodiments shown in FIG. 4, FIG. 5, or FIG. 9.

According to the methods provided in embodiments of this application, this application further provides a speech dialog system. The speech dialog system includes the foregoing ASR engine, TaskBot engine, and TTS engine, or includes the foregoing ASR engine, NLU engine, DM engine, and TTS engine.

According to the methods provided in embodiments of this application, this application further provides a speech speed adjustment system. The speech speed adjustment system includes the foregoing speech dialog apparatus and the foregoing terminal device.

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

## Claims

1. A speech speed adjustment method, comprising:
sending a first speech to a terminal device;
receiving speech speed feedback information from the terminal device; and
sending a second speech to the terminal device based on the speech speed feedback information, wherein
a speech speed of the second speech is different from a speech speed of the first speech.

2. The method according to claim 1, wherein when the speech speed feedback information indicates that the speech speed is excessively fast,
if the first speech carries only non-key information, a speech speed of non-key information in the second speech is lower than a speech speed of the non-key information in the first speech.

3. The method according to claim 1 or 2, wherein when the speech speed feedback information indicates that the speech speed is excessively fast,
if the first speech carries key information, a speech speed of key information in the second speech is lower than a speech speed of the key information in the first speech.

4. The method according to claim 3, wherein the speech speed of the non-key information in the second speech is the same as the speech speed of the non-key information in the first speech.

5. The method according to any one of claims 1 to 4, wherein
the second speech carries only the key information, and the speech speed of the second speech is a configured speech speed of key information corresponding to a current session.

6. The method according to any one of claims 1 to 4, wherein
the second speech carries only the non-key information, and the speech speed of the second speech is a configured speech speed of non-key information corresponding to a current session.

7. The method according to any one of claims 1 to 4, wherein
the second speech carries the key information and the non-key information, the speech speed of the key information in the second speech is a configured speech speed of key information corresponding to a current session, and the speech speed of the non-key information in the second speech is a configured speech speed of non-key information corresponding to the current session.

8. The method according to any one of claims 1 to 7, wherein the speech speed of the key information in the first speech is lower than the speech speed of the non-key information in the first speech, or the speech speed of the key information in the first speech is the same as the speech speed of the non-key information in the first speech.

9. The method according to any one of claims 3 to 5, 7, and 8, wherein the key information is user information obtained from a service system.

10. A speech speed adjustment method, comprising:
receiving a first speech from a speech dialog apparatus;
playing the first speech to a user;
receiving speech speed feedback information from the user;
sending the speech speed feedback information to the speech dialog apparatus;
receiving a second speech from the speech dialog apparatus, wherein the second speech is generated by the speech dialog apparatus based on the speech speed feedback information, and a speech speed of the second speech is different from a speech speed of the first speech; and
playing the second speech to the user.

11. The method according to claim 10, wherein when the speech speed feedback information indicates that the speech speed is excessively fast,
if the first speech carries only non-key information, a speech speed of non-key information in the second speech is lower than a speech speed of the non-key information in the first speech.

12. The method according to claim 10 or 11, wherein when the speech speed feedback information indicates that the speech speed is excessively fast,
if the first speech carries key information, a speech speed of key information in the second speech is lower than a speech speed of the key information in the first speech.

13. The method according to claim 12, wherein the speech speed of the non-key information in the second speech is the same as the speech speed of the non-key information in the first speech.

14. The method according to any one of claims 10 to 13, wherein
the second speech carries only the key information, and the speech speed of the second speech is a configured speech speed of key information corresponding to a current session.

15. The method according to any one of claims 10 to 13, wherein
the second speech carries only the non-key information, and the speech speed of the second speech is a configured speech speed of non-key information corresponding to the current session.

16. The method according to any one of claims 10 to 13, wherein
the second speech carries the key information and the non-key information, the speech speed of the key information in the second speech is a configured speech speed of key information corresponding to a current session, and the speech speed of the non-key information in the second speech is a configured speech speed of non-key information corresponding to the current session.

17. The method according to any one of claims 10 to 16, wherein the speech speed of the key information in the first speech is lower than the speech speed of the non-key information in the first speech, or the speech speed of the key information in the first speech is the same as the speech speed of the non-key information in the first speech.

18. The method according to any one of claims 12 to 14, 16, and 17, wherein the key information is user information obtained from a service system.

19. A speech dialog system, comprising a dialog task engine and a text-to-speech engine, wherein
the text-to-speech engine is configured to send a first speech to a terminal device;
the dialog task engine is configured to: receive speech speed feedback information from the terminal device, and send first session information to the text-to-speech engine, wherein the first session information comprises a speech speed adjustment instruction, and the speech speed adjustment instruction is determined based on the speech speed feedback information; and
the text-to-speech engine is further configured to send a second speech to the terminal device based on the speech speed adjustment instruction, wherein a speech speed of the second speech is different from a speech speed of the first speech.

20. The system according to claim 19, further comprising a speech recognition engine, wherein
after the text-to-speech engine sends the first speech to the terminal device, and before the dialog task engine receives the speech speed feedback information from the terminal device,
the speech recognition engine is configured to: receive a third speech from the terminal device, perform text conversion on the third speech to obtain the speech speed feedback information, and send the speech speed feedback information to the dialog task engine.

21. The system according to claim 19 or 20, wherein the first session information further comprises a to-be-played text, and the second speech is synthesized by the text-to-speech engine from key information in the to-be-played text with a configured speech speed of key information corresponding to a current session and non-key information in the to-be-played text with a configured speech speed of non-key information corresponding to the current session.

22. The system according to claim 21, wherein the key information in the to-be-played text is annotated by the dialog task engine.

23. The system according to claim 21 or 22, wherein the first session information further comprises an identifier of the current session, and the identifier of the current session is used by the text-to-speech engine to obtain the configured speech speed of non-key information and the configured speech speed of key information that correspond to the current session.

24. The system according to any one of claims 21 to 23, wherein when the speech speed feedback information indicates that the speech speed is excessively fast, and the first speech carries only non-key information, the speech speed adjustment instruction instructs to reduce the configured speech speed of non-key information and the configured speech speed of key information that correspond to the current session.

25. The system according to any one of claims 21 to 24, wherein when the speech speed feedback information indicates that the speech speed is excessively fast, and the first speech carries key information, the speech speed adjustment instruction instructs to reduce the configured speech speed of key information corresponding to the current session.

26. The system according to claim 24 or 25, wherein in configured speech speeds of the current session before adjustment, the configured speech speed of key information is lower than the configured speech speed of non-key information, or the configured speech speed of key information is the same as the configured speech speed of non-key information.

27. The system according to any one of claims 21 to 26, wherein the key information is user information obtained from a service system.

28. A speech dialog apparatus, comprising a processor, a transceiver, and a memory, wherein the memory stores computer program instructions, and the processor runs the computer program instructions, to implement the method according to any one of claims 1 to 9 by invoking the transceiver.

29. A terminal device, comprising a processor, a memory, and a transceiver, wherein the memory stores computer program instructions, and the processor runs the computer program instructions, to implement the method according to any one of claims 10 to 18 by invoking the transceiver.

30. A speech speed adjustment system, comprising a speech dialog apparatus and a terminal device, wherein the speech dialog apparatus is configured to implement the method according to any one of claims 1 to 9, and the terminal device is configured to implement the method according to any one of claims 10 to 18.

31. A computer-readable storage medium, wherein the computer-readable storage medium stores a computer program, and when the computer program is run, the method according to any one of claims 1 to 9 or the method according to any one of claims 10 to 18 is implemented.
